# EUROPÄISCHE PATENTSCHRIFT

(11) **EP 4 103 448 B1**
(45) Veröffentlichungstag und Bekanntmachung des Hinweises auf die Patenterteilung: **10.07.2024**
(21) Anmeldenummer: 21801897.6
(22) Anmeldetag: 28.10.2021
(51) Int. Cl.: B62B 5/00, B62B 3/02, B60R 5/04

(54) **TRANSPORT- UND VERLADEANORDNUNG FÜR EIN KRAFTFAHRZEUG**
TRANSPORT AND LOADING ASSEMBLY FOR A MOTOR VEHICLE
ENSEMBLE DE TRANSPORT ET DE CHARGEMENT POUR UN VÉHICULE AUTOMOBILE

(30) Priorität: 27.11.2020 DE 102020131525
(43) Veröffentlichungstag der Anmeldung: 21.12.2022
(73) Patentinhaber: Martin, Knut, 76327 Pfinztal (DE)
(72) Erfinder: Martin, Knut, 76327 Pfinztal (DE)
(74) Vertreter: Wacker, Jost Oliver
(86) Internationale Anmeldenummer: PCT/EP2021/079973
(87) Internationale Veröffentlichungsnummer: WO 2022/111937

(56) Entgegenhaltungen:
- EP-A1- 3 020 381
- EP-A1- 3 501 941
- EP-A2- 1 955 894
- DE-U1- 202017 103 297

## Beschreibung

Die Erfindung betrifft eine Transport- und Verladeanordnung für ein Kraftfahrzeug, wie insbesondere einen PKW mit einem sich bis zu einer Hecköffnung, wie beispielsweise in Form einer Heckklappe, einer Hecktür oder einem Kofferraumdeckel, erstreckenden Laderaum nach dem Oberbegriff des Anspruchs 1 sowie einen Transportwagen und ein Verladeverfahren unter Verwendung der Transport- und Verladeanordnung nach den Oberbegriffen der Ansprüche 19 und 20. Der PKW kann dabei beispielsweise in Kombi-, Hochdachkombi-, SUV-, Pickup-, Van-, Minivan-, Schrägheck- oder Limousinen Bauweise ausgeführt sein. Die Transport- und Verladeanordnung weist hierbei einen Transportwagen auf, der ein Fahrgestell mit mehreren Abrollmitteln und wenigstens eine feste oder abnehmbare beziehungsweise austauchbare Transportaufnahme umfasst. Die Transportaufnahme kann dabei beispielsweise durch einen Korb, einen Behälter, eine Kühlbox, eine Kindersitzaufnahme, eine Werkzeugaufnahme beziehungsweise den Aufbau eines Werkzeugwagens, Werkstattwagens, Handwerkerwagens und/oder eine Aufnahme für Freizeitausrüstungsgegenstände gebildet sein. Das Fahrgestell beziehungsweise der Transportwagen insgesamt kann dabei zwischen einer Transportstellung, in der der Transportwagen auf einem Untergrund abstellbar ist und zum Transport von aufgenommenen Gegenständen verfahren werden kann, und einer Verladestellung verstellt werden, in der das Fahrgestell und/oder der Transportwagen insgesamt minimierte Außenmaße zum leichteren Verladen und Verstauen im Laderaum aufweist. Ferner weist die Transport- und Verladeanordnung eine Verladevorrichtung auf, die zur Unterbringung beziehungsweise Befestigung im Laderaum des Kraftfahrzeugs vorgesehen ist und die einen Verlademechanismus umfasst. Der Verlademechanismus dient dabei zum wenigstens teilweise selbsttätigen Einladen des Transportwagens in den Laderaum hinein und/oder zum Ausladen des Transportwagens aus dem Laderaum heraus. Dabei weist der Transportwagen eine Höhenverstellungseinrichtung auf, mittels der eine Höhe des Transportwagens beziehungsweise ein vertikaler Abstand der Transportaufnahme gegenüber den Abrollmitteln, insbesondere stufenlos oder zumindest vielfach abgestuft, einstellbar ist, um eine von der Transportstellung und der Verladestellung unterschiedliche und vorbestimmte Anlegestellung und/oder Abstützstellung gegenüber der Verladevorrichtung einstellen zu können, aus der ein wenigstens teilweise selbsttätiger Verladevorgang mittels der Verladevorrichtung erfolgen kann. Eine vielfache Abstufung liegt dabei vor, wenn die Höhe der Transportaufnahme zwischen einer größten und einer kleinsten Höheneinstellung wenigstens in fünf vorzugsweise zehn Zwischenstufen eingestellt werden kann. Die Höhenverstellungseinrichtung kann hierzu beispielsweise am Fahrgestell und oder an der Transportaufnahme einen höhenverstellbaren Mechanismus aufweisen. Die vertikale Verstellung kann dabei beispielsweise durch linear verlagerbare, verschwenkbare, schraubenartig verdrehbare, teleskopierbare, scheren- oder kniegelenksartige Mittel und/oder alle sonstigen bekannten und geeigneten Mittel für eine manuelle, teil- oder vollautomatische Höhenverstellung gebildet sein, die beispielsweise manuell, mechanisch, hydraulisch und/oder elektrisch angetrieben ist. Hierdurch kann der Transportwagen beziehungsweise dessen Transportaufnahme höhenmäßig sehr genau an die Hecköffnung beziehungsweise an die im Laderaum aufgenommene Verladevorrichtung angepasst werden. Durch die neben der Transportstellung und der Verladestellung zusätzliche Einstellbarkeit der Anlegestellung beziehungsweise Abstützstellung kann dabei eine sichere Aufnahme des Transportwagens durch die Verladevorrichtung und ein störungsfreies, selbsttätiges Verladen in den Laderaum gewährleistet werden.

DE10043398A1 offenbart ein System zum Beladen eines Fahrzeugs, bei dem ein Hubwagen über eine Koppeleinrichtung mit einer Aufnahmeeinrichtung im Laderaum eines Fahrzeugs verbunden werden kann. Der Hubwagen weist eine Transportaufnahme sowie ein starres Fahrgestell auf, deren Abstand zueinander eingestellt werden kann. Zum Verladen wird die Transportaufnahme auf eine geeignete Höhe eingestellt und auf eine Stellfläche des Fahrzeugs verlagert. Anschließend wird das Fahrgestell in eine Position oberhalb der Ladefläche angehoben, um den Hubwagen vollständig in den Laderaum verbringen zu können. In einer alternativen Ausführungsform wird ein Teleskophubwagen verwendet, der über eigene Rollen der Transportaufnahme auf eine Ladefläche geschoben wird, während das Fahrgestell teilweise eingeklappt und teilweise mittels einer Teleskopeinrichtung in die Position oberhalb der Ladefläche verlagert wird.

EP1955894A2 beschriebt dabei eine Transportvorrichtung zur Aufnahme auf einem Ladeboden in einem Fahrzeug, die einen Transportbehälter und ein Transportgestell aufweist. Das Transportgestell weist dabei einen Rahmen auf, an dem zumindest vier Beine mit Rädern gehalten sind. Die Höhe des Transportgestells ist dabei an die Höhe des Ladebodens anpassbar. Hierzu ist die Länge zweier Beine jeweils paarweise einstellbar.

EP3020381A1 offenbart eine Verladevorrichtung für die Fahrtrage eines Rettungsfahrzeuges. Die Verladevorrichtung weist dabei einen Faltmechanismus auf, der eine Tragenaufnahme von einer schrägen Entladeposition in eine waagerechte Position führt, sobald sich die ausgebrachte Trageaufnahme unter und hinter dem Schwerpunkt der Fahrtrage befindet.

DE102016114310A1 offenbart einen Lastenwagen mit einer Aufnahme, die verstellbar an einem Fahrgestell gehalten ist. Die Aufnahme kann dabei höhenmäßig gegenüber dem Fahrgestell so eingestellt werden, dass sie auf eine Ladefläche geschoben werden kann. Sobald die Aufnahme auf der Ladefläche lagert, kann dann das Fahrgestell um die Aufnahme herum in eine Faltposition gefaltet werden.

US2006/0061116A1 zeigt einen ausfahrbaren Gerätetisch zur Verwendung an einem Pickup-Truck. Der Gerätetisch kann dabei über ausziehbare Verladeschienen von einer Ladefläche weg verlagert und anschließend über ausklappbare und höhenverstellbare Beine auf einem Untergrund abgestellt und verfahren werden.

DE102019212501A1 offenbart ein Nutzfahrzeug mit einem Ladeboden, in den ein Transportwagen derart integriert ist, dass er mit dem Ladeboden eine gemeinsame Ladefläche bildet. Der Transportwagen weist dabei ein höhenverstellbares, ausklappbares Fahrgestell auf.

DE19521549A1 beschreibt eine Halterungsvorrichtung mit zwei auf einer Ladefläche vorgesehenen Schienen, auf denen ein Aufnahmegestell verladen werden kann. An dem Gestell sind dabei klappbare Beine vorgesehen, die beim Ausladen ausgeklappt und beim Einladen eingeklappt werden.

US2014/0356112A1 zeigt einen Pickup-Truck mit Verladeschienen, mittels denen ein Transportwagen gehalten und von einer Verladefläche geschoben werden kann. Anschließend kann an dem von den Verladeschienen gehaltenen Transportwagen ein Fahrgestell ausgefahren werden, das über ein Scherengelenk höhenverstellbar ist. Über das höhenverstellbare Fahrgestell ist der Transportwagen auf einem Untergrund verfahrbar und kann nach Einstellung der passenden Höhe wieder von den Verladeschienen aufgenommen werden.

US2019/0235508A1 beschreibt ein autonomes Lieferfahrzeug, an dem ein verfahrbarer Aufnahmebehälter ein- und ausladbar ist, der hierzu einklappbare Beine aufweist.

DE102014016905A1 zeigt ein auf einem Schienensystem eines Krankenwagens verladbares Aufnahmegestell mit einem einklappbaren Fahrgestell.

US2002/0149176A1 zeigt einen zusammenklappbaren Transportwagen, an dem vier Räder jeweils an einer Teleskopeinrichtung gehalten sind. Für einen Verladevorgang sind die Räder dabei paarweise höhenverstellbar.

Aus DE102015220655A1 ist ein Transport- und Verladesystem bekannt, das das Verladen von Lasten, wie insbesondere Einkäufen, leichter und bequemer machen soll. Zudem soll dabei die Notwendigkeit des üblichen Umladens der Lasten von einem Einkaufswagen in den Kofferraum vermieden werden. Hierzu weist der Transportwagen ein zusammen- und auseinanderklappbares Gestell auf. Ferner ist ein Förderband, eine Platte und/oder ein Rahmen vorgesehen, das/der aus dem Kofferraum heraus unter den Transportbehälter verfahrbar ist, um diesen aufzunehmen und selbsttätig in den Kofferraum zu verladen.

Nachteilig an dem bekannten Transport- und Verladesystem ist, dass es insbesondere bei einem unebenen Untergrund zu sehr unterschiedlichen Ausrichtungen des Transportwagens gegenüber der Verladevorrichtung kommen kann, die eine störungsfreie Aufnahme des Transportwagens auf dem Förderband, der Platte oder dem Rahmen verhindern. Dadurch ist es in vielen Situationen notwendig, den Transportwagen händisch auszurichten und zu halten, um die Verladevorrichtung unter diesen verfahren zu können. Ein solches händisches Ausrichten ist jedoch, insbesondere bei einem voll beladenen Transportwagen, in vielen Fällen gar nicht oder nur mit sehr hohem Kraftaufwand möglich. Darüber hinaus ist der Transportwagen des bekannten Transport- und Verladesystems relativ umständliche in seiner Handhabung und insbesondere im Falle der Benutzung des Transportwagens an Treppen oder in Aufzügen im Wesentlichen gänzlich ungeeignet.

Die Aufgabe der Erfindung ist es, bei einer gattungsgemäßen Transport- und Verladeanordnung die genannten Nachteile zu vermeiden und ein einfaches und komfortables Aus- und Einladen des Transportwagens in den Laderaum hinein beziehungsweise aus dem Laderaum heraus sowie eine komfortable Handhabung zu ermöglichen.

Diese Aufgabe wird erfindungsgemäß durch die Merkmale der unabhängigen Ansprüche 19 und 20 sowie durch eine Transport- und Verladeanordnung mit den Merkmalen des Anspruchs 1 gelöst. Dabei weist das Fahrgestell zur Einstellung der Höhe des Transportwagens beziehungsweise zur Einstellung des vertikalen Abstandes gegenüber wenigstens drei Abrollmitteln ein wenigstens teilweise teleskopierbares Gestänge mit wenigstens drei vollautomatisch, teilautomatisch oder manuell voneinander unabhängig verstellbaren Teleskopeinrichtungen auf, an denen jeweils eines der Abrollmittel gehalten ist. Auf diese Weise ist es möglich, die Höhe des Transportwagens beziehungsweise der Transportaufnahme insbesondere stufenlos einzustellen und dabei das Fahrgestell mit der jeweils eingestellten Höhe stabil zu fixieren. Dabei ist neben der Höhenanpassung gegenüber der Verladevorrichtung beziehungsweise gegenüber dem Laderaum des betreffenden Kraftfahrzeugs zum besseren Verladen zudem auch in der Transportstellung eine Höhenanpassung des Transportwagens an die Körpergröße des jeweiligen Benutzers möglich. Hierdurch ist unabhängig von der Körpergröße des Benutzers auch beim Transport von Gegenständen mit dem Transportwagen eine komfortable Handhabung möglich. Das wenigstens teilweise teleskopierbare Gestänge mit wenigstens drei voneinander unabhängig verstellbaren Teleskopeinrichtungen ermöglicht dabei neben der reinen Höheneinstellung des Transportwagens zudem eine Anpassung der Ausrichtung der Transportaufnahme an die Ausrichtung des Kraftfahrzeugs und dessen Laderaums. Diese horizontale Ausrichtung kann dabei bezüglich zwei zueinander senkrecht stehender horizontaler Raumachsen erfolgen, wie beispielsweise in einer Längsrichtung und einer Querrichtung des Transportwagens.

Besonders günstig ist es dabei, wenn jedes Abrollmittel zur Einstellung des vertikalen Abstandes gegenüber der Transportaufnahme an einer eigenen Teleskopeinrichtung gehalten ist, wodurch der Transportwagen beziehungsweise die Transportaufnahme hinsichtlich beider horizontaler Raumachsen gegenüber dem Laderaum beziehungsweise dessen Ladekante ausgerichtet werden kann, um ein störungsfreies Greifen und Verladen des Transportwagens durch die Verladevorrichtung zu ermöglichen.

In einer besonders bevorzugten Ausführungsform wirkt dabei zwischen der Verladevorrichtung und dem Transportwagen eine Sensoranordnung, in Abhängigkeit von deren Signal die Höhe des Transportwagens gegenüber der Verladevorrichtung in vorgegebener Weise selbsttätig einstellbar ist. Auf diese Weise kann eine für die Aufnahme und das Verladen optimale Höhe des Transportwagens gegenüber der Verladevorrichtung im Wesentlichen selbsttätig eingestellt werden.

Vorteilhafterweise ist dabei mittels der Höhenverstellungseinrichtung ein vertikaler Abstand der Transportaufnahme gegenüber wenigstens zwei zueinander beabstandeten Abrollmitteln beziehungsweise Rädern unterschiedlich einstellbar. Auf diese Weise ist neben der bloßen Einstellung der Höhe des Transportwagens zusätzlich eine horizontale Ausrichtung der Transportaufnahme gegenüber der Verladevorrichtung beziehungsweise eine Anpassung der Lage der Transportaufnahme an die Ausrichtungen der Verladevorrichtung möglich. Dadurch ist beispielsweise auch bei schräger Ausrichtung des Kraftfahrzeuges und/oder des Transportwagens in Folge eines unebenen Untergrundes eine stabile Aufnahme des Transportwagens an der Verladevorrichtung möglich.

Zudem ist es günstig, wenn an der Verladevorrichtung eine in vertikaler Richtung wirkende Führungshilfe für den Transportwagen vorgesehen ist, an die der Transportwagen in einer Anlegestellung anlegbar ist. Die Führungshilfe dient dabei zum einen als Anschlag zur sicheren Positionierung des Transportwagens gegenüber der Verladevorrichtung beziehungsweise gegenüber dem Kraftfahrzeug. Zudem dient die Führungshilfe zur exakten vertikalen Führung während der Anpassung der Höhe des Transportwagens beziehungsweise während der Ausrichtung der Transportaufnahme gegenüber der Verladevorrichtung.

Dabei ist die Führungshilfe vorteilhafterweise horizontal verschwenkbar an der Verladevorrichtung gehalten und kann an einen durch zwei Seitenflächen gebildeten Eckbereich der Transportaufnahme umgreifend angelegt werden. Durch eine derartige verschwenkbare Führungshilfe, die den betreffenden Eckbereich winkelartig umgreift, kann eine besonders exakte vertikale Führung gewährleistet werden. Insbesondere bei paarweiser Anordnung zweier einander zuwendbarer derartiger Führungshilfen kann dabei beim Anlegen des Transportwagens zudem eine gewisse Zentrierung gegenüber der Verladevorrichtung erzielt werden.

Vorteilhafterweise ist am Transportwagen eine Fahrgestellaufnahme vorgesehen, in der das Fahrgestell in der Verladestellung wenigstens teilweise aufnehmbar ist. Auf diese Weise kann das Fahrgestell beim Verladen und beim Transport im Laderaum beispielsweise wenigstens teilweise innerhalb der Außenkontur des Transportwagens aufgenommen werden.

Bevorzugterweise weist die Fahrgestellaufnahme dabei wenigstens eine Teleskopaufnahme auf, in die die wenigstens eine Teleskopeinrichtung in der Verladestellung wenigstens teilweise einfahrbar ist. Durch eine derartige Teleskopaufnahme zur Aufnahme wenigstens einer Teleskopeinrichtung kann das Fahrgestell beim Verladen und während des Transports im Laderaum wenigstens teilweise in eine besonders platzsparende Position verbracht werden, wie beispielsweise innerhalb der Außenkontur des Transportwagens.

Zudem weist die Verladevorrichtung vorteilhafterweise Eingriffsmittel auf, die zur Herstellung oder zum Lösen einer zug- und/oder schubfesten Verbindung mit dem Transportwagen in eine Ausfahrstellung außerhalb des Laderaumes verlagerbar sind. Hierdurch kann der Transportwagen beabstandet zum betreffenden Kraftfahrzeug gegenüber der Verladevorrichtung fixiert werden, um einen Einladevorgang einzuleiten, oder freigegeben werden, um einen Ausladevorgang abzuschließen. Auf diese Weise kann sichergestellt werden, dass während des gesamten Verladevorganges des Transportwagens keine Beschädigungen am Kraftfahrzeug durch einen Kontakt mit dem Transportwagen verursacht werden.

Dabei ist es günstig, wenn die Eingriffsmittel an wenigstens einem ausfahrbaren Verladeteil der Verladevorrichtung gehalten sind, an dem die Transportaufnahme in einer Abstützstellung des Transportwagens in Gravitationsrichtung abgestützt werden kann. Hierdurch kann der Transportwagen wenigstens teilweise unabhängig vom Fahrgestell gehalten werden, so dass dieses nach Herstellung der Verbindung zwischen Transportwagen und den Eingriffsmitteln wenigstens teilweise in die Verladestellung verbracht werden kann beziehungsweise die teleskopierbaren Gestänge wenigstens teilweise in die Teleskopaufnahmen hineingefahren werden können. Das ausfahrbare Verladeteil, kann dabei gegenüber der übrigen Verladevorrichtung durch jede bekannte und geeignete Antriebsart verstellbar sein, wie beispielsweise durch einen elektrischen Zahnrad-/Zahnstangen- oder Riemenantrieb, einen hydraulischen und/oder einen sonstigen Linearantrieb.

Dabei ist es günstig, wenn zusätzlich zur zug- und/oder schubfesten Verbindung mit dem Transportwagen über die Eingriffsmittel in der Verladestellung ferner eine entgegen der Gravitationsrichtung wirkende Sicherung des Transportwagens herstellbar ist. Auf diese Weise kann der Transportwagen in der Verladestellung in alle Richtungen an der Verladevorrichtung gesichert werden, was einen sicheren und geräuscharmen Transport des in der Verladestellung im Laderaum aufgenommenen Transportwagens ermöglicht.

Vorteilhafterweise sind die Eingriffsmittel an einem Verladeschlitten ausgebildet, der am ausfahrbaren Verladeteil motorisch verlagerbar ist. Über einen derartigen motorisch angetriebenen Verladeschlitten mit Eingriffsmitteln kann der Transportwagen beim Verladen somit selbsttätig und sicher in den Laderaum des Kraftfahrzeugs gezogen beziehungsweise beim Entladen aus dem Laderaum hinausgeschoben werden. Der wenigstens eine Verladeschlitten kann dabei am Verladeteil beziehungsweise gegenüber der übrigen Verladevorrichtung durch jede bekannte und geeignete Antriebsart verlagerbar sein, wie beispielsweise durch einen elektrischen Zahnrad-/Zahnstangen- oder Riemenantrieb, einen hydraulischen und/oder einen sonstigen Linearantrieb.

Dabei ist es günstig, wenn der Verladeschlitten beispielsweise ein Hohlprofil mit einem oberseitigen Längsschlitz aufweist, der von einem transportwagenseitigen Hintergreifelement hintergriffen werden kann oder anders herum. Hierdurch kann die zug- und/oder schubfeste Verbindung zwischen dem Verladeschlitten und dem Transportwagen besonders einfach hergestellt werden, wobei der Transportwagen durch die hintergreifende Verbindung insbesondere auch in vertikaler Richtung gegenüber der Verladevorrichtung sicher fixiert werden kann. Alternativ hierzu können die Eingriffsmittel auch eine manuell, teil- oder vollautomatisch zwischen einer Freigabestellung und einer Verriegelungsstellung umschaltbare Verriegelung aufweisen, mittels der die in vertikaler und/oder horizontaler Richtung wirkende zug- und/oder schubfeste Verbindung zwischen dem Verladeschlitten und dem Transportwagen herstellbar ist.

Zudem ist es vorteilhaft, wenn die Verladevorrichtung wenigstens einen Abstützbereich aufweist, der sich in einer Verladerichtung erstreckt und entlang dessen verlagerbare Abstützmittel des Transportwagens bewegt werden können, wie beispielsweise Rollen, Walzen, Gleitlager, oder andere verlagerbare Abstützmittel. Hierdurch kann der Transportwagen auch mit einem hohen Ladewicht störungsfrei und geräuscharm entlang der Verladevorrichtung bewegt werden, um ein- oder ausgeladen zu werden.

In einer weiteren besonders bevorzugten Ausführungsform weist die Transportaufnahme wenigstens zwei trennbare beziehungsweise verbindbare Teilaufnahmen auf. Dies ermöglicht eine angepasste Verwendung der Transportaufnahme in Abhängigkeit der aufzunehmenden Transportteile beziehungsweise der Einkäufe.

Dabei weisen die beiden Teilaufnahmen vorteilhafterweise zwei stirnseitig aneinander anlegbare Seitenwandungen auf, wobei beide Seitenwandungen über Verbindungsmittel und Verbindungsgegenmittel aneinander festgelegt werden können, die durch eine gegenseitige horizontale Verlagerung wiederum voneinander lösbar sind. Hierdurch sind die beiden Teilaufnahmen besonders einfach und insbesondere auch selbsttätig durch die Verladevorrichtung miteinander verbindbar beziehungsweise voneinander trennbar.

Ferner ist es günstig, wenn die Transportaufnahme am Fahrgestell lösbar festgelegt werden kann, um sie einerseits während des Transports mittels des Fahrgestells sicher an diesem zu halten und andererseits auch unabhängig vom Fahrgestell handhaben beziehungsweise tragen zu können.

In einer besonders bevorzugten Ausführungsform weist das Fahrgestell wenigstens zwei Teilfahrgestelle auf, die über Verriegelungsmittel trennbar miteinander verbunden werden können. Hierdurch kann der Transportwagen je nach Bedarf oder Anwendungszweck größenmäßig angepasst werden.

Dabei ist es günstig, wenn an wenigstens einem der Teilfahrgestelle ein beispielsweise ausklappbares oder festes Stützfahrgestell vorgesehen ist. Auf diese Weise kann auch bei Verwendung lediglich eines vom übrigen Fahrgestell abgetrennten Teilfahrgestells dieses standfähig beziehungsweise in aufrechter Stellung verfahrbar ausgebildet werden.

Zudem ist es dabei von Vorteil, wenn auch die Verladevorrichtung zwei voneinander unabhängig ausfahrbare Verladeteile aufweist, an denen jeweils eine der Teilaufnahmen in Gravitationsrichtung abgestützt werden kann und die jeweils Eingriffsmittel zur Herstellung oder zum Lösen der zug- und/oder schubfesten Verbindung mit einer der Teilaufnahmen aufweisen. Auf diese Weise können beide Teilaufnahmen beziehungsweise Teilfahrgestelle unabhängig voneinander durch die Verladevorrichtung verlagert werden. Dadurch können diese unabhängig voneinander ein- und ausgeladen oder durch Relativbewegung der Verbindungsmittel und Verbindungsgegenmittel miteinander verbunden und voneinander getrennt werden.

Bevorzugterweise ist die Höhenverstellungseinrichtung elektrisch betrieben und weist wenigstens eine Akkumulatoreinrichtung auf. Dadurch kann die Höhe des Transportwagens in komfortabler Weise an die Höhe beziehungsweise Ausrichtung der Verladevorrichtung oder an die Körpergröße des Benutzers angepasst werden.

Vorteilhafterweise weist der Transportwagen elektrische Anschlussmittel auf, die mit der Akkumulatoreinrichtung verbunden sind. Zudem sind an der Verladevorrichtung Anschlussgegenmittel vorgesehen, die mit einer elektrischen Stromversorgung des Kraftfahrzeugs verbunden werden können. Die Anschlussgegenmittel können dabei in einer Fixierstellung des Transportwagens an der Verladevorrichtung von den elektrischen Anschlussmitteln kontaktiert werden. Auf diese Weise kann die Akkumulatoreinrichtung des Transportwagens in dessen Fixierstellung im Laderaum von der elektrischen Stromversorgung des Kraftfahrzeugs aufgeladen werden.

Alternativ oder zusätzlich hierzu können am Transportwagen zweite elektrische Anschlussmittel vorgesehen sein, die mit den fahrzeugseitigen Anschlussgegenmitteln verbindbar sind und über die ein Kühlaggregat des Transportwagens mit elektrischem Strom versorgt werden kann. Auf diese Weise kann in der Transportaufnahme ein Kühlbehälter vorgesehen werden, der in der Fixierstellung des Transportwagens mittels des Kühlaggregats und der elektrischen Stromversorgung des Kraftfahrzeugs gekühlt werden kann. Alternativ oder zusätzlich zum Kühlbehälter kann zudem ein elektrisches Zubereitungs- beziehungsweise Erwärmungsgerät für Lebensmittel vorgesehen sein, wie beispielsweise eine Mikrowelle, ein elektrischer Herd oder ein Backofen.

Ferner ist es günstig, wenn der Transportwagen einen Fahrantrieb aufweist, mittels dem dieser selbsttätig verfahren werden kann. Hierdurch können auch höhere Lasten der an der Transportaufnahme aufgenommenen Gegenstände in komfortabler Weise mittels des Transportwagens transportiert werden.

Darüber hinaus kann der Transportwagen vorteilhafterweise ein Fahrassistenzsystem aufweisen, um auch eine selbsttätige Steuerung und somit ein autonomes Fahren des Transportwagens zu ermöglichen.

Zudem ist es günstig, wenn der Transportwagen eine Leuchteinrichtung aufweist, wie beispielsweise einen Scheinwerfer oder eine Leuchtreklame. Auf diese Weise kann die am Transportwagen mitgeführte Akkumulatoreinrichtung für weitere Funktionen verwendet werden.

Ferner ist es vorteilhaft, wenn die Transportaufnahme, beziehungsweise die diese bildenden Teilaufnahmen, klappbar ausgebildet ist beziehungsweise sind. Hierdurch kann die Transportaufnahme im leeren Zustand besonders kompakt im Laderaum mitgeführt werden, wie in der Verladestellung beziehungsweise der Fixierstellung.

In einer weiteren vorteilhaften Ausführungsform ist am Transportwagen eine Warenerfassungs- und/oder Bezahl-Einrichtung vorgesehen, die beispielsweise ein Display, einen Scanner, eine Bezahl-App, ein Kartenlesegerät, umfassen kann. Hierdurch ermöglicht der Transportwagen eine komfortable Erfassung der in der Transportaufnahme abgelegten Waren und/oder einen besonders einfachen Bezahlvorgang. Auf diese Weise ist es beispielsweise möglich, die während eines Einkaufs in der Transportaufnahme abgelegten Waren zu bezahlen, ohne die Waren für den Bezahlvorgang aus dem Transportwagen wieder herausnehmen zu müssen.

Ferner ist es günstig, wenn am Transportwagen eine integrierte Regenabdeckung vorgesehen ist, mittels der die Transportaufnahme und die darin aufgenommenen Transportstücke abgedeckt werden können.

Ferner wird ein Verladeverfahren vorgeschlagen, bei dem die Transport- und Verladeanordnung in einer der oben genannten Ausführungsformen verwendet wird und bei dem in einem ersten Schritt der Transportwagen an die im Kraftfahrzeug gelagerte Verladevorrichtung angenähert wird und in einem zweiten Schritt eine Position des Transportwagens, wie insbesondere dessen Höhe und/oder Ausrichtung gegenüber der Verladevorrichtung ermittelt wird, wobei in einem dritten Schritt in Abhängigkeit der ermittelten Position eine Anlegestellung des Transportwagens selbsttätig eingestellt wird, in der die Transportaufnahme gegenüber der Verladevorrichtung in einer vorbestimmten Weise, wie insbesondere hinsichtlich deren Höhe und/oder Ausrichtung, angeordnet ist. Hierdurch kann der Transportwagen auch bei uneiheitlicher Höhe und/oder Ausrichtung gegenüber dem Kraftfahrzeug, wie beispielsweise in Folge eines unebenen oder uneinheitlichen Untergrundes, derart gegenüber dem Kraftfahrzeug ausgerichtet werden, dass ein insbesondere teil- oder vollautomatischer Verladevorgang mittels der Verladevorrichtung gestartet werden kann.

Vorteilhafterweise werden dabei im dritten Schritt die Abstände von wenigstens zwei, wenigstens drei oder vier beziehungsweise allen Abrollmitteln gegenüber der Transportaufnahme eingestellt, um diese hinsichtlich Höhe und Ausrichtung genau an das Kraftfahrzeug beziehungsweise die darin aufgenommene Verladevorrichtung anpassen zu können.

Zudem ist es günstig, wenn in einem vierten Schritt der Transportwagen aus der Anlegestellung in eine Abstützstellung verstellt wird, in der er in Gravitationsrichtung GR an der Verladevorrichtung abgestützt ist. Auf diese Weise kann das Gewicht des Transportwagens beziehungsweise der beispielsweise mit Transportgegenständen gefüllten Transportaufnahme teilweise an der Verladevorrichtung und dem Kraftfahrzeug aufgenommen werden, um das Transportgestell teilweise zu entlasten und dadurch auf das Einladen vorbereiten zu können.

Dabei ist in der Abstützstellung vorteilhafterweise die zug- und/oder schubfeste Verbindung zwischen dem Transportwagen und der Verlagerungsvorrichtung hergestellt, so dass in einem fünften Schritt ein dem Kraftfahrzeug zugewandter Teil des Fahrgestells in die Fahrgestellaufnahme verlagert wird. Auf diese Weise wird beim Absetzen des Transportwagens an der Verladevorrichtung gleichzeitig auch die für den selbsttätigen Verladevorgang benötigte zug- und/oder schubfeste Verbindung hergestellt, mittels der der Transportwagen in den Laderaum hinein beziehungsweise aus dem Laderaum heraus verlagert werden kann.

Zudem ist es günstig, wenn der Transportwagen in einem sechsten Schritt mit dem teilweise in der Fahrgestellaufnahme aufgenommenen Fahrgestell und einem sich am Untergrund abstützenden, vom Kraftfahrzeug abgewandten Teil des Fahrgestells mittels der Verladevorrichtung verlagerbar ist, wodurch das Gewicht des Transportwagens auch während des Verladevorgangs in den Laderaum hinein oder aus diesem heraus noch teilweise über das Fahrgestell abgetragen wird, solange der Transportwagen noch nicht beziehungsweise sobald er nicht mehr stabil an der Verladevorrichtung gelagert ist.

Vorteilhafterweise wird der am Untergrund abgestützte Teil des Fahrgestells während des sechsten Schrittes zum Ausgleich einer vertikalen Verlagerung verstellt, die beispielsweise durch Absenkung des Kraftfahrzeuges in Folge der Gewichtsverlagerung des Transportwagens oder durch eine vertikale Verlagerung der Abrollmittel in Folge einer Unebenheit des Untergrundes auftritt. Die vertikale Verlagerung kann dabei beispielsweise durch eine Druck- oder Neigungssensorik ermittelt werden, wobei der Abstand zwischen den Abrollmitteln und der Transportaufnahme in Abhängigkeit eines Signals dieser Sensorik verstellt beziehungsweise geregelt wird, um die eingestellte Ausrichtung der Transportaufnahme gegenüber der Verladevorrichtung beizubehalten. Auf diese Weise kann der Transportwagen auch mit einem größeren aufgenommenen Gewicht und auf unebenem Untergrund störungsfrei verladen werden.

Dabei ist es günstig, wenn der Transportwagen in einem dem sechsten Schritt nachfolgenden siebten Schritt in die Verladestellung verbracht wird, in der auch der vom Kraftfahrzeug abgewandte Teil des Fahrgestells in die Fahrgestellaufnahme verlagert wird, sobald der Transportwagen soweit in den Laderaum hinein verlagert ist, dass er stabil auf der Verladevorrichtung aufliegt. In der Verladestellung kann der Transportwagen somit in einer besonders kompakten Stellung innerhalb des Laderaums verlagert werden.

Ferner wird der Transportwagen in einem dem ersten bis siebten Schritt nachfolgenden Entladevorgang entgegen der Verladevorrichtung V wieder aus dem Laderaum heraus verlagert, wobei nun in umgekehrter Reihenfolge zunächst der dem Kraftfahrzeug abgewandte Teil und dann der dem Kraftfahrzeug zugewandte Teil des Fahrgestells ausgefahren wird, um das Gewicht des Transportwagens nach und nach wieder über das Fahrgestell am Untergrund abtragen zu können.

Dabei ist es besonders günstig, wenn das Fahrgestell in Abhängigkeit des Signals einer Druck- oder Lagesensorik ausgefahren und in die Anlegestellung verbracht wird, diesen auch beim Ausladen sicher und teil- oder vollautomatisch in die Anlegestellung verbringen zu können.

In den Figuren ist eine beispielhafte Ausführungsform der Erfindung dargestellt. Es zeigen:
- Figur 1: eine Seitenansicht einer erfindungsgemäßen Transport- und Verladeanordnung mit einem Transportwagen in Transportstellung,
- Figur 2: eine rückseitige Ansicht der Transport- und Verladeanordnung nach Figur 1,
- Figur 3: eine Seitenansicht der Transport- und Verladeanordnung nach Figur 1 vor Herstellung einer zug- und/oder schubfesten Verbindung,
- Figur 4: eine Draufsicht auf die Transport- und Verladeanordnung nach Figur 1,
- Figur 5: eine Seitenansicht der Transport- und Verladeanordnung nach Figur 1 bei Herstellung der zug- und/oder schubfesten Verbindung,
- Figur 6: eine Seitenansicht der Transport- und Verladeanordnung nach Figur 1 in einer Fixierstellung,
- Figur 7: eine rückseitige Ansicht der Transport- und Verladeanordnung nach Figur 6,
- Figur 8: eine rückseitige Ansicht der Transport- und Verladeanordnung in einer alternativen Ausführungsform,
- Figur 9: eine Seitenansicht eines Teilwagens der Transport- und Verladeanordnung nach Figur 8
- Figur 10: eine Draufsicht auf eine Verladevorrichtung der Transport- und Verladeanordnung nach Figur 8 und
- Figur 11: eine Seitenansicht der Transport- und Verladeanordnung in einer weiteren alternativen Ausführungsform.

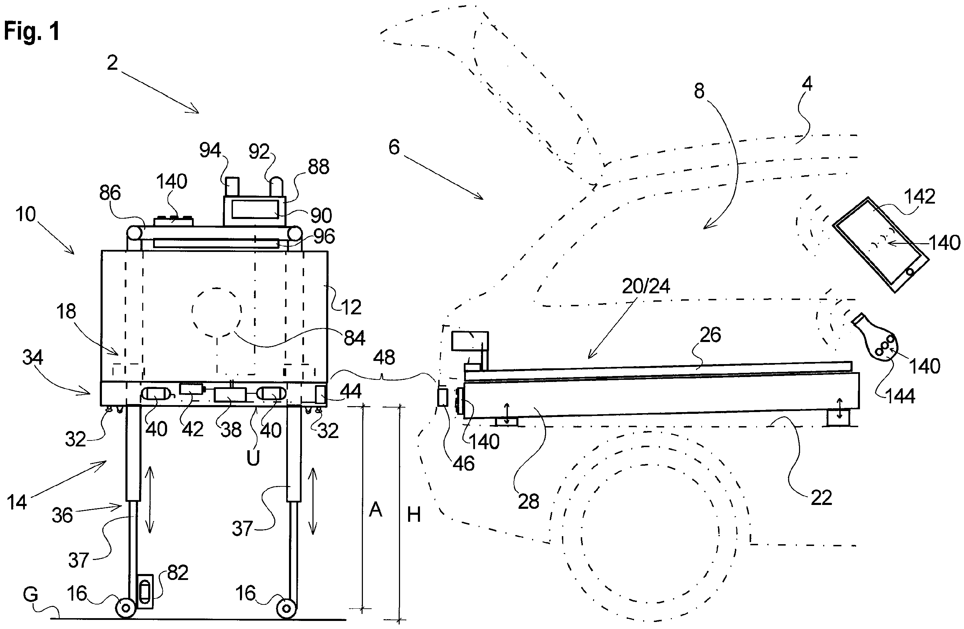

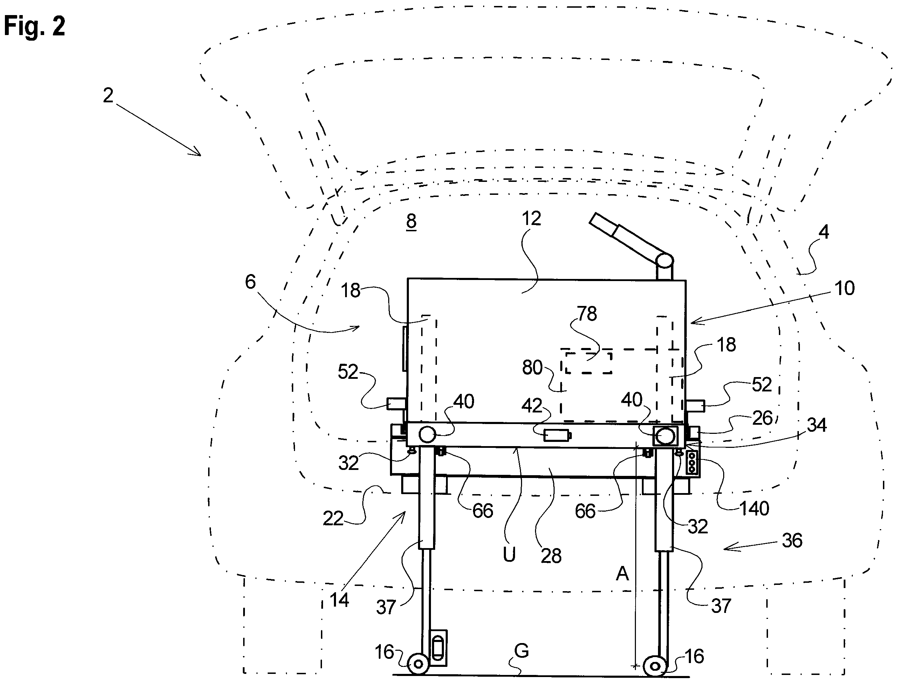

Die Figuren 1und 2 zeigen eine Transport- und Verladeanordnung 2 für ein Kraftfahrzeug 4 in beispielhafter Form eines PKW in SUV-Bauweise mit einem über eine Hecköffnung 6 zugänglichen Laderaum 8.

Die Transport- und Verladeanordnung 2 weist dabei einen Transportwagen 10 mit einer Transportaufnahme 12 auf, die insbesondere abnehmbar an einem Fahrgestell 14 mit beispielsweise vier Abrollmitteln 16 gehalten ist. Die Abrollmittel 16 können dabei als Einfachrollen oder alternativ hierzu auch als paarweise angeordnete Rollen oder als Mehrfachrollen ausgebildet sein. In jedem Fall sind die Abrollmittel 16 über das Fahrgestell 14 zwischen einer dargestellten Transportstellung und einer Verladestellung verstellbar. In der Transportstellung kann der Transportwagen 10 über die Abrollmittel 16 an einem Untergrund G abgestellt und verfahren werden. In der Verladestellung ist das Fahrgestell 14 an der Transportaufnahme 12 angelegt beziehungsweise wenigstens teilweise in eine an der Transportaufnahme 12 vorgesehene Fahrgestellaufnahme 18 hinein verlagert. Hierdurch steht der Transportwagen 10 mit verringerten Außenabmessungen für einen Verladevorgang zur Verfügung.

Sowohl die Transportaufnahme 12 als auch das Fahrgestell 14 können aus allen für die Herstellung von Transportwagen 10 bekannten und geeigneten Materialien hergestellt sein. Insbesondere können sie wenigstens teilweise aus einem Metall-, Kunststoff-, Glas- oder Kohlefasermaterial beziehungsweise aus Kombinationen hieraus hergestellt sein.

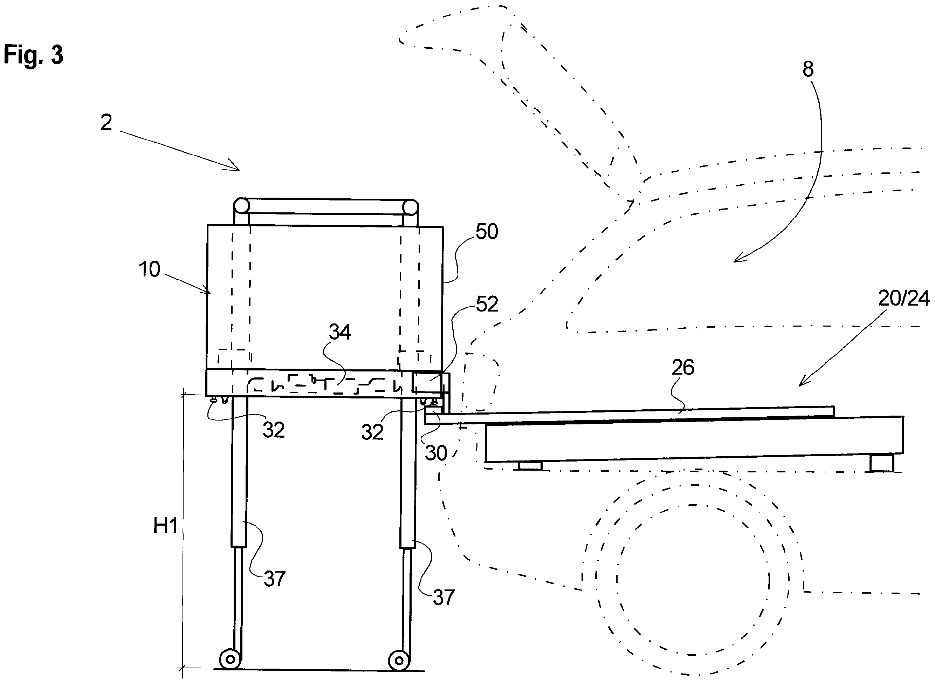

Zudem weist die Transport- und Verladeanordnung 2 eine Verladevorrichtung 20 auf, die an einem Ladeboden 22 des Laderaums 8 aufgenommen ist. Diese bildet einen Verlademechanismus 24, der ein Ein- und Ausladen des Transportwagens 10 in beziehungsweise aus dem Laderaum 8 des Kraftfahrzeugs 4 ermöglicht. Hierzu weist die Verladevorrichtung 20 ein aus dem Laderaum 8 heraus ausfahrbares Verladeteil 26 auf, wie beispielsweise eine Platte, einen Träger- oder Teleskoparm oder eine Schiene, wobei das Verladeteil 26 verlagerbar an einer auf dem Ladeboden 22 abstellbaren Lagerplatte 28 gehalten ist. Die Lagerplatte 28 kann dabei vorteilhafterweise höhenverstellbar ausgeführt sein, um sie allein oder in Verbindung mit der Verladevorrichtung 20 beispielsweise bei Nichtgebrauch tief im Laderaum 8 versenken zu können. Darüber hinaus sind an der Verladevorrichtung 20 Eingriffsmittel 30 vorgesehen, die eine zug- und/oder schubfeste Verbindung mit dem Transportwagen 10 ermöglichen. Hierfür dienen die Eingriffsmittel 30 zur Herstellung einer form- oder reibschlüssigen Verbindung mit Eingriffsgegenmitteln 32 des Transportwagens 10 und sind beispielsweise, wie in Figur 3 dargestellt, am Verladeteil 26 der Verladevorrichtung 20 gehalten. Zusammen mit dem Verladeteil 26 können die Eingriffsmittel 30 dabei in eine Ausfahrstellung außerhalb des Laderaums 8 verlagert werden. Die Eingriffsgegenmittel 32 können durch separate Formschlussmittel gebildet sein, die wie in den Figuren 1 und 2 dargestellt, an einer Unterseite U des Transportwagens 10 abstehen. Alternativ hierzu können die Eingriffsgegenmittel 32 jedoch auch durch bestehende beziehungsweise integrierte Bereiche oder Teile des Transportwagens 10 gebildet sein, die eine zug- und/oder schubfeste Verbindung mit den entsprechend angepassten Eingriffsmitteln 30 der Verladevorrichtung 20 ermöglichen. Alternativ oder zusätzlich hierzu können die Eingriffsmittel 30 oder Eingriffsgegenmittel 32 auch eine manuell, teil- oder vollautomatisch zwischen einer Freigabestellung und einer Verriegelungsstellung umschaltbare Verriegelung aufweisen, mittels der die in vertikaler und/oder horizontaler Richtung wirkende zug- und/oder schubfeste Verbindung zwischen der Verladevorrichtung 20 und dem Transportwagen 10 herstellbar ist (nicht dargestellt).

Um die für einen komfortablen Verladevorgang benötigte zug- und/oder schubfeste Verbindung zwischen der Verladevorrichtung 20 und dem Transportwagen 10 störungsfrei herstellen zu können, weist der Transportwagen 10, wie in den Figuren 1 und 2 dargestellt, eine Höhenverstellungseinrichtung 34 auf, die beispielhaft in die Transportaufnahme 12 integriert ist jedoch alternativ auch am Fahrgestell 14 gehalten sein kann. Diese kann sowohl vollautomatisch, teilautomatisch oder manuell betrieben sein und ermöglicht in der Transportstellung des Fahrgestells 14 die Einstellung einer Höhe H des Transportwagens 10 gegenüber dem jeweiligen Untergrund G beziehungsweise die Ausrichtung der Unterseite U der Transportaufnahme 12 gegenüber der Verladevorrichtung 20. Hierbei wird der im Wesentlichen durch das Fahrgestell 14 gebildete vertikale Abstand A zwischen der Transportaufnahme 12 und den einzelnen Abrollmitteln 16 eingestellt.

Dabei weist das Fahrgestell 14 ein wenigstens teilweise teleskopierbares Gestänge 36 auf, das die Abrollmittel 16 mit der Transportaufnahme 12 verbindet. Zur Einstellung des jeweils gewünschten Abstandes A weist die Höhenverstellungseinrichtung 34 zudem eine Steuereinrichtung 38 auf, mittels der wenigstens ein elektrischer Stellantrieb 40 teil- oder vollautomatisch steuerbar ist, der zum Verstellen des wenigstens einen teleskopierbaren Gestänges 36 dient. Vorzugsweise sind dabei wenigstens zwei Abrollmittel 16, insbesondere wenigstens drei oder vier beziehungsweise alle Abrollmittel 16 an jeweils einer eigenen Teleskopeinrichtung 37 gehalten, um an diesen vollautomatisch, teilautomatisch oder manuell unterschiedliche vertikale Abstände A einstellen zu können. Hierdurch kann neben der Anpassung der Höhe H auch die Ausrichtung der Transportaufnahme 12 gegenüber dem Verladeteil 26 angepasst werden, was beispielsweise im Falle einer gewissen Schrägstellung des Kraftfahrzeugs 4 und/oder des Transportwagens 10 erforderlich sein kann, wie beispielsweise in Folge eines unebenen Untergrundes G.

Um die Höhenverstellungseinrichtung 34 unabhängig vom Kraftfahrzeug 4 mit elektrischer Energie versorgen zu können, weist diese eine Akkumulatoreinrichtung 42 auf. Ferner weist die Höhenverstellungseinrichtung 34 vorzugsweise eine Sensoreinrichtung 44 auf, die zusammen mit Sensormitteln 46 an der Verladevorrichtung 20 beziehungsweise an der Hecköffnung 6 des Kraftfahrzeugs 4 eine zwischen Transportwagen 10 und Verladevorrichtung 20 wirkende Sensoranordnung 48 bildet. Diese dient zur selbsttätigen Erfassung der gegenseitigen Höhen und/oder Ausrichtungen sowie zur Weitergabe entsprechender Informationen beziehungsweise Signale. In Abhängigkeit der Signale der Sensoranordnung 48 kann die Steuereinrichtung 38 die Teleskopeinrichtungen 37 auf unterschiedliche Längen einstellen, um die gewünschte Höhe H des Transportwagens 10 und Ausrichtung der Transportaufnahme 12 gegenüber der Verladevorrichtung 20 beziehungsweise gegenüber einer Ladekante des Laderaums 8 einzustellen.

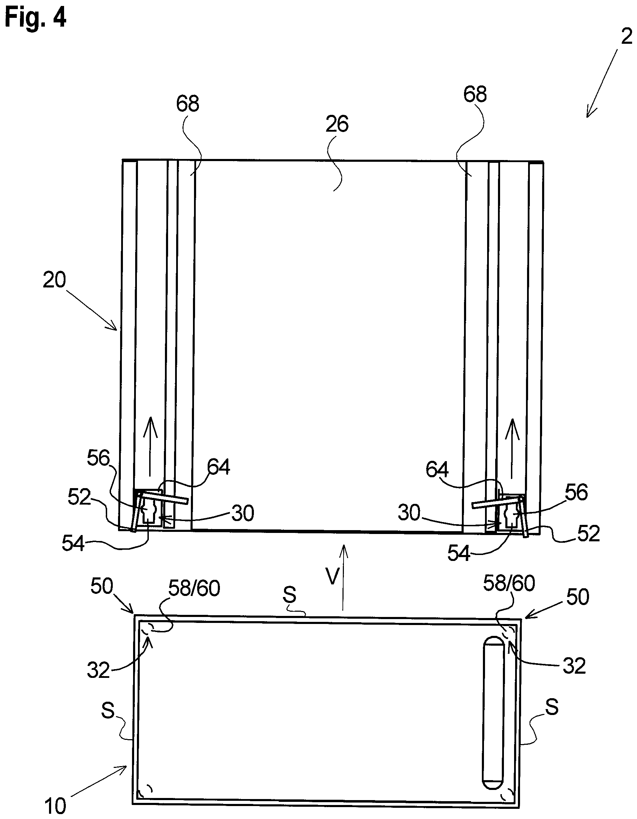

Zum Verladen des Transportwagens 10 wird dieser in einem ersten Schritt in seiner Transportstellung an die Verladevorrichtung 20 in Verladerichtung V gemäß Figur 4 angenähert. Mittels der Sensoranordnung 48 wird dann in einem zweiten Schritt die Position des Transportwagens 10 relativ zum Kraftfahrzeug 4 ermittelt. In einem dritten Schritt erfolgt dann mittels der Höhenverstellungseinrichtung 34 die selbsttätige Einstellung der Höhe H des Transportwagens 10 gegenüber dem jeweiligen Untergrund G beziehungsweise die Ausrichtung der Unterseite U der Transportaufnahme 12 gegenüber der Verladevorrichtung 20, um den Transportwagen in eine Anlegestellung gemäß Figur 3 zu bringen. Hierzu wird der im Wesentlichen durch das Fahrgestell 14 gebildete vertikale Abstand A zwischen der Transportaufnahme 12 und den einzelnen Abrollmitteln 16 eingestellt.

Hierbei kann mittels der Höhenverstellungseinrichtung 34 beispielsweise eine erste Höhe H1 der Unterseite U des Transportwagens 10 gegenüber dem Untergrund G gemäß Figur 3 eingestellt werden, bei der zwei Eckbereiche 50 der Transportaufnahme 12 an jeweils eine Führungshilfe 52 der Verladevorrichtung 20 angelegt werden können. Die Führungshilfen 52 sind dabei, wie aus Figur 4 zu entnehmen ist, beispielhaft durch jeweils ein verschwenkbar gehaltenes Winkelelement gebildet, das den jeweiligen Eckbereich 50 umgreift und dabei an beiden den jeweiligen Eckbereich 50 bildenden Seitenflächen S anlegbar ist. Durch die horizontal verschwenkbaren Führungshilfen 52 wird die Transportaufnahme 12 in der eingestellten ersten Höhe H1 der Unterseite U gemäß Figur 3 zwischen den Führungshilfen 52 zentriert und ist anschließend in vertikaler Richtung geführt verstellbar. Zur optimalen Erfassung der jeweils aktuellen Höhe H des Transportwagens 10 beziehungsweise der aktuellen Höhe H1 von dessen Unterseite U können dabei die Sensormittel 46 der Sensoranordnung 48 beispielsweise auch in die Führungshilfen 52 integriert sein.

Wie aus Figur 3 ferner zu entnehmen ist, sind die Führungshilfen 52 dabei derart positioniert und ist die erste Höhe H1 derart gewählt, dass die Eingriffsgegenmittel 32 genau oberhalb der Eingriffsmittel 30 angeordnet sind. Die Eingriffsmittel 30 sind dabei gemäß Figur 4 beispielhaft durch einen von oben hintergreifbaren Längsschlitz 54 gebildet, an dem eine Eintrittserweiterung 56 ausgebildet ist. Diese weist geringfügig größere Abmessungen als ein jeweiliges Hintergreifelement 58 der Eingriffsgegenmittel 32 auf, das wiederum beispielhaft durch einen Schraubenkopf 60, wie beispielsweise einen Linsen-, Senk- oder Hammerkopf gebildet ist.

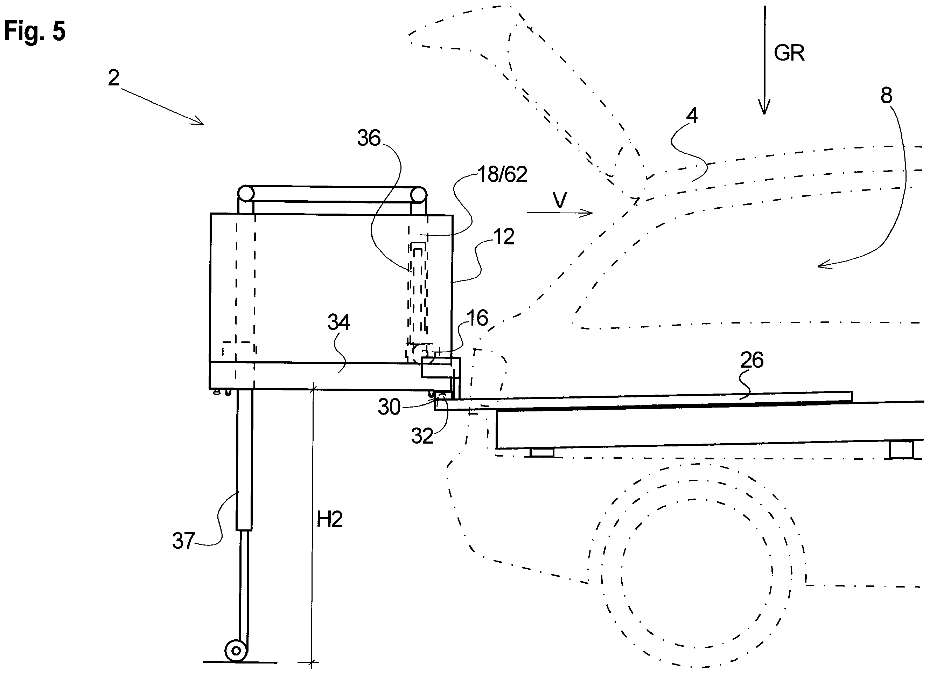

Aus der in Figur 3 dargestellten Anlegestellung kann der Transportwagen 10 über die Höhenverstellungseinrichtung 34 nun in einem vierten Schritt in eine Abstützstellung verbracht werden, in der eine zweite Höhe H2 der Unterseite U gemäß Figur 5 eingestellt wird. In dieser werden die Eingriffsmittel 30 an die Eingriffsgegenmittel 32 angelegt werden und das jeweilige Hintergreifelement 58 tritt in die Eintrittserweiterung 56 des Längsschlitzes 54 ein. Hierdurch wird die Transportaufnahme 12 in Gravitationsrichtung GR von dem Verladeteil 26 abgestützt, an dem die Eingriffsmittel 30 lagern. Dadurch können nun die benachbart zum Kraftfahrzeug 4 angeordneten Teleskopeinrichtungen 37 mit den hieran gehaltenen Abrollmitteln 16 in einem fünften Schritt in die Fahrgestellaufnahme 18 verlagert werden. Vorzugsweise weist diese dabei zur vollständigen Aufnahme der Gestänge 36 entsprechend dimensionierte Teleskopaufnahmen 62 auf.

Wie insbesondere aus Figur 4 zu entnehmen ist, sind die Eingriffsmittel 30 an zwei Verladeschlitten 64 ausgebildet, die aus der Ausfahrstellung gemäß der Figuren 2 und 4 entlang des Verladeteils 26 in den Laderaum 8 hinein verlagerbar sind. Bei dieser Verlagerung hintergreift das jeweilige Hintergreifelement 58 den betreffenden Längsschlitz 54 und kommt an diesem in eine Anschlagstellung, so dass in Verladerichtung V eine zugfeste Verbindung zwischen den Eingriffsmitteln 30 und den Eingriffsgegenmitteln 32 hergestellt ist und die Transportaufnahme 12 von den Verladeschlitten 64 aus der in Figur 5 dargestellten Position in einem sechsten Schritt in den Laderaum 8 hineingezogen wird. Hierbei ist das Gewicht des Transportwagens 10 zu einem Teil an der Verladevorrichtung 20 zum anderen Teil über die noch ausgefahrenen Teleskopeinrichtungen 37 des vom Kraftfahrzeug abgewandten Teils des Fahrgestells 14 und die betreffenden Abrollmittel 16 am Untergrund G abgestützt.

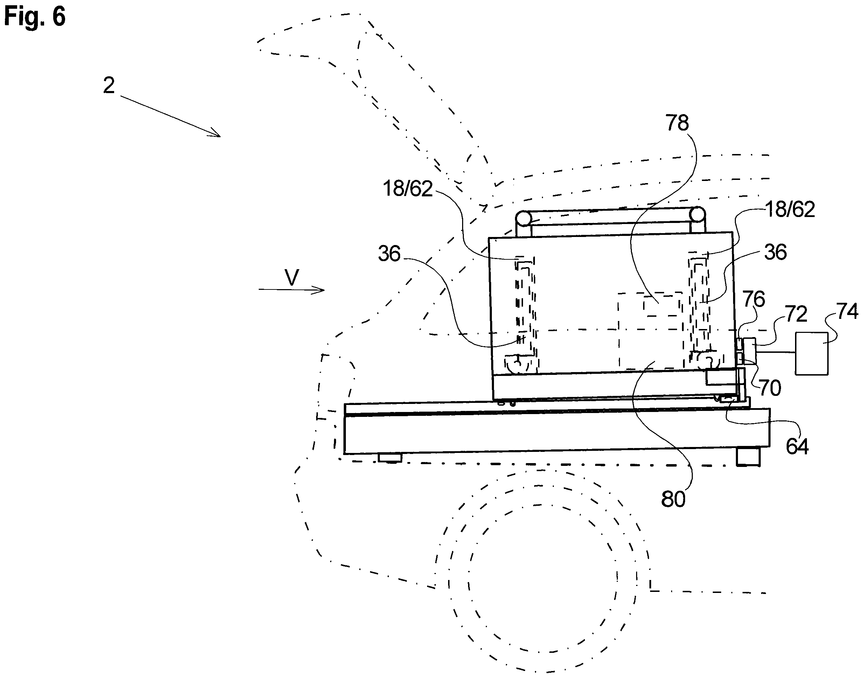

Beim weiteren Verladevorgang werden auch die vom Kraftfahrzeug 4 abgewandten Teleskopeinrichtungen 37 vor einem Kontakt mit dem Kraftfahrzeug 4 in einem siebten Schritt in die hierfür vorgesehenen Teleskopaufnahmen 62 hineingefahren, so dass der Transportwagen 10 anschließend die Verladestellung gemäß Figur 6 einnimmt, in der sein Gewicht vollständig auf der Verladevorrichtung 20 lagert.

Die hintergreifende Verbindung zwischen den Eingriffsmitteln 30 und den Eingriffsgegenmitteln 32 wirkt dabei auch entgegen der Gravitationsrichtung GR als Sicherung der am Verladeteil 26 anliegenden Position der Transportaufnahme 12. Dies ermöglicht es, mit der Verlagerung der Verladeschlitten 64 auch die verbleibenden Teleskopeinrichtungen 37 in die Fahrgestellaufnahme 18 beziehungsweise in die für diese vorgesehenen Teleskopaufnahmen 62 verlagern zu können. Hiernach befindet sich das Fahrgestell 14 und der Transportwagen 10 insgesamt in der Verladestellung, wie in Figur 6 dargestellt. Bei Erreichen einer Endstellung werden die Verladeschlitten 64 und/oder der Transportwagen 10 zusätzlich gegenüber der Verladevorrichtung 20 beziehungsweise gegenüber dem Kraftfahrzeug 4 zusätzlich fixiert und befinden sich somit in einer Fixierstellung, die eine sichere und positionsstabile Beförderung des Transportwagens 10 mit dem Kraftfahrzeug 4 gewährleistet.

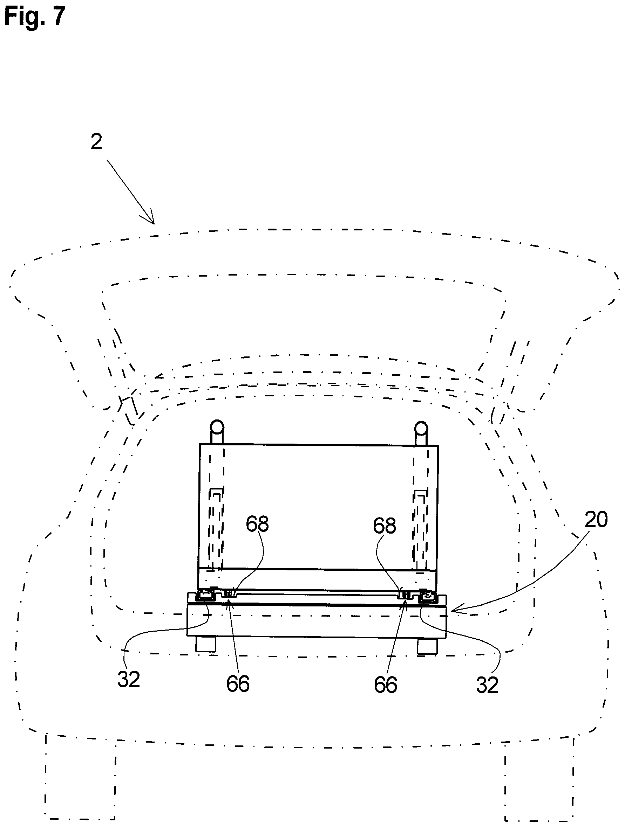

Um auch bei einem hohen Transportgewicht des Transportwagens 10 einen störungsfreien Verladevorgang in den Laderaum 8 hinein zu gewährleisten, können an der Unterseite U der Transportaufnahme 12 neben den Eingriffsgegenmitteln 32 zusätzlich verlagerbare Abstützmittel 66 vorgesehen sein, wie insbesondere aus den Figuren 2 und 7 zu entnehmen ist. Diese verlagerbaren Abstützmittel 66 können beispielsweise in Form von Rollen, Walzen oder Gleitlagern ausgebildet sein, die entlang eines entsprechenden beispielsweise schienenartigen Abstützbereiches 68 verlagerbar sind, der sich in Verladerichtung V über die Verladevorrichtung 20 erstreckt, wie insbesondere aus Figur 4 zu entnehmen ist.

Wie aus Figur 6 ferner zu entnehmen ist, können am Transportwagen 10 elektrische Anschlussmittel 70 vorgesehen sein, die mit der Akkumulatoreinrichtung 42 verbunden sind und in der Fixierstellung im Laderaum 8 Anschlussgegenmittel 72 kontaktieren. Die Anschlussgegenmittel 72 stehen wiederum in Verbindung mit einer elektrischen Stromversorgungseinheit 74 des Kraftfahrzeuges 4, wie beispielsweise einer Autobatterie und/oder einer Lichtmaschine des Kraftfahrzeuges 4. Auf diese Weise kann die Akkumulatoreinrichtung 42 des Transportwagens 10 in der Fixierstellung im Laderaum 8 wiederkehrend aufgeladen werden.

Ferner können am Transportwagen 10 zweite elektrische Anschlussmittel 76 vorgesehen sein, die in der Fixierstellung ebenfalls die Anschlussgegenmittel 72 des Kraftfahrzeuges 4 Kontaktieren können und mit einem an der Transportaufnahme 12 vorgesehenen Kühlaggregat 78 verbunden sind. Auf diese Weise kann das Kühlaggregat 78 eine an der Transportaufnahme 12 herausnehmbar aufgenommene oder in diese integrierte Kühlbox 80 immer dann herunterkühlen, wenn sich der Transportwagen 10 in der Fixierstellung im Laderaum 8 befindet. Alternativ oder zusätzlich zur Kühlbox 80 kann über die Akkumulatoreinrichtung 42 und/oder über die Anschlussmittel 76 zudem auch ein Gerät für die Zubereitung von Speisen vorgesehen sein, wie beispielsweise ein Mikrowellenherd oder ein elektrischer Ofen (nicht dargestellt).

Durch die Möglichkeit der wiederkehrenden Aufladung der Akkumulatoreinrichtung 42 kann diese auch zur elektrischen Versorgung weiterer Funktionseinheiten herangezogen werden. Beispielsweise kann der Transportwagen 10 gemäß Figur 1 und 2 einen Fahrantrieb 82 zum wenigstens teilweise selbsttätigen Antrieb der Abrollmittel 16 aufweisen. Dabei kann der Fahrantrieb 82 vom Benutzer selbst und/oder über ein Fahrassistenzsystem gesteuert sein, das beispielsweise in der Steuereinrichtung 38 integriert ist. Zudem kann der Transportwagen 10 eine Leuchteinrichtung 84 aufweisen, die beispielsweise durch einen Scheinwerfer und/oder eine Leuchtreklame gebildet ist.

Ferner kann beispielsweis an einem Griff 86 des Transportwagens 10 eine Warenerfassungs- und/oder Bezahleinrichtung 88 vorgesehen sein, mittels der die in der Transportaufnahme 12 abgelegten Waren beispielsweise mittels eines Scanners 92 erfasst und an einem Display 90 angezeigt werden können. Über das Display 90 ist dabei zudem eine an der Steuereinrichtung 38 oder einer sonstigen Computereinrichtung abgelegte Bezahl-App bedienbar, mittels der die erfassten Waren zudem auch unmittelbar bezahlt werden können, wie beispielsweise mittels einer ebenfalls bereits hinterlegten Bankverbindung und/oder mittels eines Kartenlesegerätes 94. Auf diese Weise müssen die Waren für den Bezahlvorgang nicht mehr aus der Transportaufnahme 12 herausgenommen werden. Die Warenerfassungs- und/oder Bezahleinrichtung 88 kann dabei abnehmbar am Transportwagen 10 angebracht oder fest an diesem verbaut sein, wie beispielsweise am Griff 86.

Als weitere Ausstattung kann an dem Transportwagen 10 zudem eine Regenabdeckung 96 zur Abdeckung der Transportaufnahme 12 vorgesehen sein, die beispielsweise ausziehbar in den Transportwagen 10 wie beispielsweise am Griff 86 integriert ist. Zudem kann der Griff 86 gegenüber dem übrigen Transportwagen 10 höhenverstellbar ausgebildet sein.

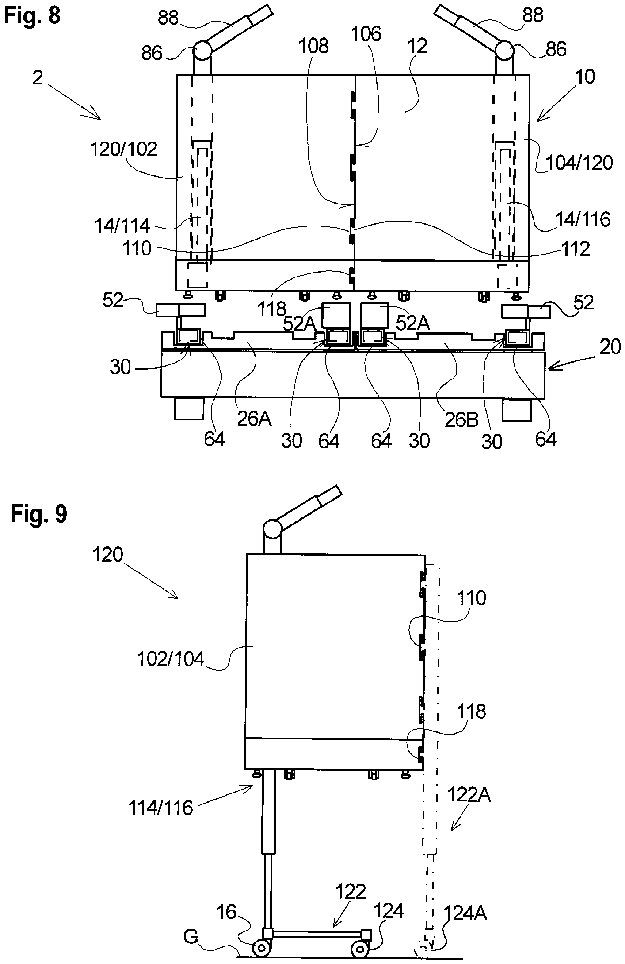

Figur 8 zeigt eine alternative Ausführungsform Transport- und Verladeanordnung 2 mit einem Transportwagen 10 in der Verladestellung, bei dem die Transportaufnahme 12 durch zwei trennbare beziehungsweise verbindbare Teilaufnahmen 102 und 104 gebildet ist. Über diese zweiteilige Ausbildung hinaus, kann die Transportaufnahme 12 alternative auch drei- oder mehrteilig ausgebildet sein (nicht dargestellt). In jedem Fall weisen die Teilaufnahmen 102, 104 zwei aneinander anlegbare Seitenwandungen 106, 108 auf, an denen Verbindungsmittel 110 und Verbindungsgegenmittel 112 vorgesehen sind. Die Verbindungsmittel 110 und Verbindungsgegenmittel 112 sind dabei derart ausgeformt, dass sie durch relative horizontale Verlagerung zueinander ineinandergeschoben werden können, um eine formschlüssige Verbindung herzustellen. Die bestehende formschlüssige Verbindung kann durch relative horizontale Verlagerung der Verbindungsmittel 110 und Verbindungsgegenmittel 112 zueinander zudem auch wiederum gelöst werden, um die beiden Teilaufnahmen 102 und 104 separat voneinander verwenden zu können, wie beispielsweise für einen kleineren Warentransport oder Einkauf.

Wie aus Figur 8 ferner zu entnehmen ist, ist dabei auch das Fahrgestell 14 in zwei trennbare beziehungsweise über Verriegelungsmittel 118 miteinander verbindbare Teilfahrgestelle 114 und 116 unterteilt, an denen die Teilaufnahmen 102 und 104 jeweils gehalten sind. Die Warenerfassungs- und/oder Bezahleinrichtung 88 kann dabei beispielsweise abnehmbar und somit wahlweise für eine der beiden Teilaufnahmen 102, 104 verwendbar sein oder an beiden Teilaufnahmen 102, 104 fest verbaut sein, wie beispielsweise am Griff 86.

Durch unterschiedliche Verlagerung der beiden Verladeteile 26A, 26B kann in jedem Fall ein Teilwagen 120 gemäß Figur 9 abgetrennt werden, der lediglich aus einem der Teilaufnahmen 102 und dem zugehörigen der beiden Teilfahrgestelle 114 besteht. Um hierbei auch bei dem Teilwagen 120 eine stabile Standfähigkeit gegenüber dem Untergrund G gewährleisten zu können, ist an dem betreffenden Teilfahrgestell 114 zudem ein Stützfahrgestell 122 vorgesehen, das beispielsweise ausklappbar am Teilfahrgestell 114 gehalten ist und über das der Teilwagen 120 über wenigstens ein zusätzliches Abrollmittel 124 am Untergrund G abstellbar beziehungsweise verfahrbar ist. Alternativ zu der dargestellten ausklappbaren Ausführungsform des Stützfahrgestells 122 kann dieses, wie in Figur 9 durch strichpunktierte Linien dargestellt, auch als abnehmbares Zusatzfahrgestell 122A mit zusätzlichen Abrollmitteln 124A ausgeführt sein, das an der betreffenden Teilaufnahme 102, 104 und/oder am Teilfahrgestell 114, 116 anbringbar ist, wie beispielsweise durch horizontales Einschieben in die Verbindungsmittel beziehungsweise Verbindungsgegenmittel 110, 112 und/oder über die Verriegelungsmittel 118.

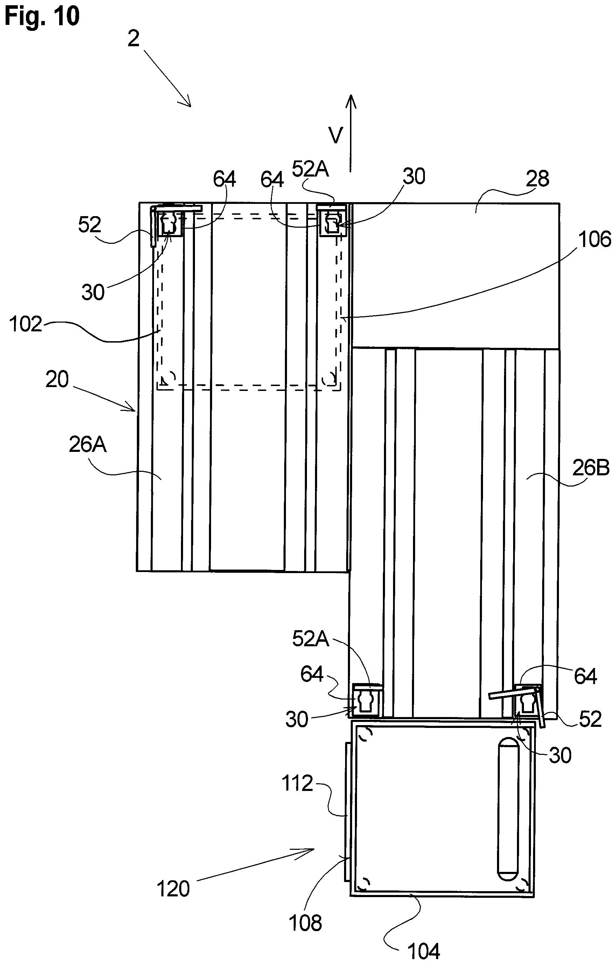

Zum Trennen und Verbinden der beiden Teilaufnahmen 102, 104 und Teilfahrgestelle 114, 116 sind an der Verladevorrichtung 20 zwei unabhängig voneinander verlagerbare Verladeteile 26A, 26B vorgesehen, die mit jeweils einem der beiden Teilwagen 120 zusammenwirken und hierfür jeweils zwei Eingriffsmittel 30, Verladeschlitten 64 und Führungshilfen 52, 52A aufweisen, wie insbesondere aus Figur 10 zu entnehmen ist. Passend hierzu sind auch an den Teilaufnahmen 102, 104 der Teilwagen 120 jeweils zwei Eingriffsgegenmittel 32 sowie verlagerbare Abstützmittel 66 vorgesehen, wie aus Figur 9 zu entnehmen ist. Die beiden mittig angeordneten Führungshilfen 52A dienen im Gegensatz zu den beiden winkelförmigen äußeren Führungshilfen dabei lediglich als Anschlag in Verladerichtung V und ermöglichen somit ein Verbinden beziehungsweise Lösen der Verbindungsmittel und Verbindungsgegenmittel 110, 112 beziehungsweise der Verriegelungsmittel 118. Auf diese Weise kann mit jeweils nur einer der beiden Verladeteile 26A; 26B der Verladevorrichtung 20 auch lediglich einer der Teilwagen 120 stabil und störungsfrei ein- und ausgeladen werden.

Unabhängig davon ob die Transport- und Verladeanordnung 2 mit dem einstückigen Transportwagen 10 oder den Teilwagen 120 verwendet wird, können die Transportaufnahme 12 beziehungsweise die Teilaufnahmen 102, 104 bedarfsweise lösbar mit dem jeweiligen Fahrgestell 14 beziehungsweise den Teilfahrgestellen 114, 116 verbunden sein, um in der Art eines Korbes oder eines sonstigen tragbaren Behältnisses verwendet werden zu können. In einer weiteren Ausführungsform können die Teilaufnahmen 102, 104 an den Teilfahrgestellen 114, 116 in einer relativ bodennahen Position fixierbar sein, um die Teilwagen 120 in der Art eines Trolleys beziehungsweise Rollkoffers bewegen zu können (nicht dargestellt). Ferner können die Transportaufnahme 12 beziehungsweise die Teilaufnahmen 102, 104 mit klappbaren Seitenflächen S beziehungsweise Seitenwandungen 106, 108 ausgestattet sein, um ein noch kompakteres Verstauen des Transportwagens 10 beziehungsweise der Teilwagen 120 zu ermöglichen.

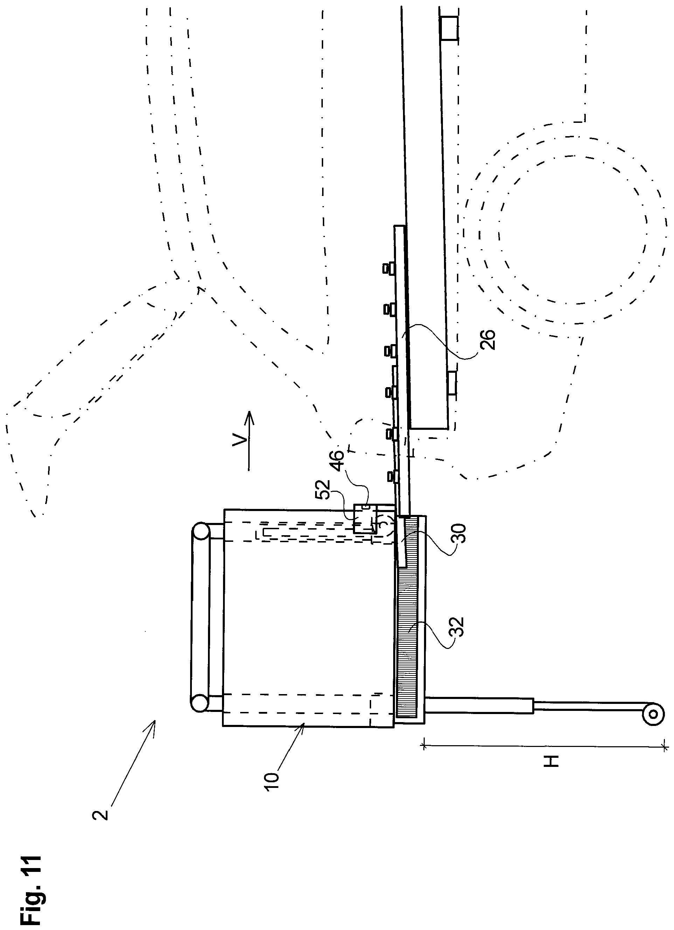

Figur 11 zeigt eine weitere alternative Ausführungsform der Transport- und Verladeanordnung 2, bei der die Eingriffsmittel 30 durch ausfahrbare Greifarme gebildet sind, die mit Eingriffsgegenmitteln 32 am Transportwagen 10 in Form von Zahnschienen zusammenwirken. Die Eingriffsmittel 30 sind ausfahrbar an zwei ebenfalls ausfahrbaren, schienenförmigen Verladeteilen 26 gelagert, an deren Ende zudem auch die vertikalen Führungshilfen 52 verschwenkbar gehalten sind.

Bei dieser Ausführungsform wird der Transportwagen 10 zu Beginn des Verladevorganges an die beiden in der Ausfahrstellung gehaltenen Führungshilfen 52 angelegt beziehungsweise, wie bereits oben beschrieben, zwischen diesen zentriert. In Abhängigkeit der Sensoranordnung 48, die beispielsweise Sensormittel 46 in den Führungshilfen 52 aufweist, wird die gewünschte Höhe H des Transportwagens 10 eingestellt. Diese Höhe H ist dabei so definiert, dass die durch die Greifarme gebildeten Eingriffsmittel 30 von den Verladeteilen 26 weg ausgefahren werden können, um wie dargestellt, in die Zahnschienen der Eingriffsgegenmittel 32 einzugreifen und dadurch die zug- und/oder schubfeste Verbindung herzustellen.

In dieser Stellung ist die Transportaufnahme 12 in Gravitationsrichtung GR an der Verladevorrichtung 20 abgestützt, so dass die benachbart zum Kraftfahrzeug 4 angeordneten Teleskopeinrichtungen 37, wie dargestellt, in die Teleskopaufnahme 62 hineingefahren werden können. Hierdurch können die Greifarme der Eingriffsmittel 30 in Richtung des Laderaums 8 verlagert werden, so dass die Zahnschienen der Eingriffsgegenmittel 32 nun von motorisch antreibbaren Zahnrädern 130 erfasst werden können, die in Verladerichtung V entlang der Verladeteile 26 angeordnet sind. Durch Antrieb dieser Zahnräder 130 wird der Transportwagen 10 somit in den Laderaum 8 hinein verladen, wobei auch die vom Kraftfahrzeug 4 abgewandten Teleskopeinrichtungen 37 vor einem Kontakt mit dem Kraftfahrzeug 4 in die hierfür vorgesehenen Teleskopaufnahmen 62 hineingefahren werden.

Zudem können auch bei dieser Ausführungsform die bereits oben beschriebenen Anschlussmittel 70 und zweiten Anschlussmittel 76 sowie ein Fahrantrieb 82 und eine Warenerfassungs- und/oder Bezahleinrichtung 88 vorgesehen sein.

Ferner können auch bei dieser Ausführungsform Fixiermittel vorgesehen sein, mittels denen der Transportwagen 10 in der Fixierstellung gegenüber der Verladevorrichtung 20 beziehungsweise gegenüber dem Laderaum 8 gesichert werden kann, um eine störungsfreie und positionsstabile Beförderung im Kraftfahrzeug 4 zu gewährleisten.

Unabhängig von der Ausführungsform kann der im Laderaum 8 aufgenommene Transportwagen 10 beziehungsweise Teilwagen 120 in einem Entladevorgang durch Ausfahren des wenigstens einen Verladeteils 26, 26A, 26B in die Ausfahrstellung und nacheinander erfolgendem Ausfahren der Teleskopeinrichtungen 37 aus den jeweiligen Teleskopaufnahmen 62 der teil- oder vollautomatisch auch wieder aus dem Kraftfahrzeug 4 ausgeladen werden. Hierzu kann beispielsweise eine Sensorik, wie beispielsweise eine Druck- oder Neigungssensorik vorgesehen sein, mittels der ein Kontakt der Abrollmittel 16 mit dem Untergrund G erkennbar ist, so dass die betreffenden Teleskopeinrichtungen G in geeigneter Höhe H des Transportwagens fixierbar sind (nicht dargestellt).

Darüber hinaus kann/können unabhängig von der Ausführungsform der Transportwagen 10 beziehungsweise die Teilwagen 120 alternativ zur der in den Figuren dargestellten Stellung quer zur Verladerichtung V je nach Größe des Laderaums beim Verladevorgang auch parallel zur Verladerichtung V ausgerichtet sein. Bei großen Kraftfahrzeugen 4 können auf diese Weise beispielsweise auch zwei einstückige Transportwagen 10 mittels der Verladevorrichtung 20 mit den zwei Verladeteilen 26A, 26B unabhängig voneinander und beispielsweise nebeneinander parallel zur Verladerichtung V verladen sowie in der Fixierstellung gehalten werden (nicht dargestellt).

Zur Aktivierung beziehungsweise direkten Ansteuerung der Verladevorrichtung 20 und/oder des Transportwagens 10 durch den Benutzer ist ferner eine Bedienungseinrichtung 140 vorgesehen. Diese kann wie in Figur 1 dargestellt am Transportwagen 10 oder an der Verladevorrichtung 20 fest oder abnehmbar positioniert sein. Alternativ hierzu kann die Bedienungseinrichtung 140 auch an einem Autoschlüssel 142 integriert werden und/oder programmtechnisch an einem tragbaren Computergerät 144, wie beispielsweise einem Smartphone, umgesetzt werden. In jedem Fall kann der Benutzer über die Bedienungseinrichtung den Verlademechanismus 24 ansteuern. Dabei kann der Benutzer das Verladeteil 26 beziehungsweise eines der Verladeteile 26A, 26B zwischen der Ausfahrstellung und der Fixierstellung verlagern. Zudem kann der Benutzer die Lagerplatte 28 gegebenenfalls zwischen einer Betriebsstellung für den Verladevorgang und einer Senkstellung für die platzsparende Aufnahme am Ladeboden 22 heben und senken. Darüber hinaus kann mittels der Bedienungseinrichtung 140 bei Bedarf auch die Höhenverstellungseinrichtung 34 direkt durch den Benutzer angesteuert werden, um die Höhe H des Transportwagens 10 beziehungsweise den Abstand A zwischen Transportaufnahme 12 und den Abrollmitteln 16 einzustellen.

Die Transport- und Verladevorrichtung 2 kann somit unabhängig von der jeweiligen Ausführungsform des Transportwagens 10 und der Verladevorrichtung während eines Verladevorganges sowohl halbautomatisch als auch vollautomatisch oder auch direkt beziehungsweise manuell bedient beziehungsweise gesteuert werden.

## Patentansprüche

1. Transport- und Verladeanordnung (2) für ein Kraftfahrzeug (4), wie insbesondere einen PKW, mit einem sich bis zu einer Hecköffnung (6) erstreckenden Laderaum (8),
mit einem Transportwagen (10), der ein Fahrgestell (14) mit mehreren Abrollmitteln (16) und wenigstens eine Transportaufnahme (12) aufweist, wobei das Fahrgestell (14) zwischen einer Transportstellung und einer Verladestellung verstellbar ist, und
mit einer im Laderaum (8) anbringbaren Verladevorrichtung (20), die einen Verlademechanismus (24) zum Ein- und/oder Ausladen des Transportwagens (10) in beziehungsweise aus dem Laderaum (8) aufweist,
wobei der Transportwagen (10) eine elektrisch betriebene Höhenverstellungseinrichtung (34) aufweist, mittels der in der Transportstellung eine Höhe (H, H1, H2) des Transportwagens (10) einstellbar ist,
**dadurch gekennzeichnet, dass** das Fahrgestell (14) zur Einstellung der Höhe (H, H1, H2) des Transportwagens (10) ein wenigstens teilweise teleskopierbares Gestänge (36) aufweist und drei Abrollmittel (16) an jeweils einer Teleskopeinrichtung (37) gehalten sind, wobei die Teleskopeinrichtungen (37) voneinander unabhängig verstellbar sind.

2. Transport- und Verladeanordnung nach Anspruch 1, **dadurch gekennzeichnet, dass** jedes Abrollmittel (16) zur Einstellung des vertikalen Abstandes (A) gegenüber der Transportaufnahme (12) an einer eigenen Teleskopeinrichtung (37) gehalten ist.

3. Transport- und Verladeanordnung nach Anspruch 1 oder 2, **dadurch gekennzeichnet, dass** eine Sensoranordnung (48) vorgesehen ist, die zwischen der Verladevorrichtung (20) und dem Transportwagen (10) wirkt, und in Abhängigkeit von einem Signal der Sensoranordnung (48) die Höhe (H, H1, H2) des Transportwagens (10) einstellbar ist.

4. Transport- und Verladeanordnung nach einem der Ansprüche 1 bis 3, **dadurch gekennzeichnet, dass** mittels der Höhenverstellungseinrichtung (34) ein vertikaler Abstand (A) der Transportaufnahme (12) gegenüber wenigstens zwei Abrollmitteln (16) zur Ausrichtung der Transportaufnahme (12) unterschiedlich einstellbar ist.

5. Transport- und Verladeanordnung nach einem der Ansprüche 1 bis 4, **dadurch gekennzeichnet, dass** an der Verladevorrichtung (20) eine in vertikaler Richtung wirkende Führungshilfe (52, 52A) vorgesehen ist, an die der Transportwagen (10) anlegbar ist, wobei insbesondere die Führungshilfe (52, 52A) horizontal verschwenkbar an der Verladevorrichtung (20) gehalten ist und an einen durch zwei Seitenflächen (S) gebildeten Eckbereich (50) der Transportaufnahme (12) umgreifend anlegbar ist.

6. Transport- und Verladeanordnung nach einem der Ansprüche 1 bis 5, **dadurch gekennzeichnet, dass** am Transportwagen (10) eine Fahrgestellaufnahme (18) vorgesehen ist, in der das Fahrgestell (14) in der Verladestellung wenigstens teilweise aufnehmbar ist, wobei die Fahrgestellaufnahme (18) insbesondere wenigstens eine Teleskopaufnahme (62) aufweist, in die die wenigstens eine Teleskopeinrichtung (37) in der Verladestellung wenigstens teilweise einfahrbar ist.

7. Transport- und Verladeanordnung nach einem der Ansprüche 1 bis 6, **dadurch gekennzeichnet, dass** die Verladevorrichtung (20) Eingriffsmittel (30) aufweist, die zur Herstellung oder zum Lösen einer zug- und/oder schubfesten Verbindung mit dem Transportwagen (10) in eine Ausfahrstellung verlagerbar sind, wobei die Eingriffsmittel (30) insbesondere an wenigstens einem ausfahrbaren Verladeteil (26, 26A, 26B) der Verladevorrichtung (20) gehalten sind, an dem die Transportaufnahme (12) in Gravitationsrichtung (GR) abstützbar ist, sowie in der Verladestellung über die Eingriffsmittel (30) zusätzlich zur zug- und/oder schubfesten Verbindung mit dem Transportwagen (10) ferner eine entgegen der Gravitationsrichtung (GR) wirkende Sicherung des Transportwagens (10) herstellbar ist.

8. Transport- und Verladeanordnung nach Anspruch 7, **dadurch gekennzeichnet, dass** die Eingriffsmittel (30) an einem Verladeschlitten (64) ausgebildet sind, der am Verladeteil (26, 26A, 26B) motorisch verlagerbar ist, wobei der Verladeschlitten (64) insbesondere einen oberseitigen Längsschlitz (54) aufweist, der von einem transportwagenseitigen Hintergreifelement (58) hintergreifbar ist oder anders herum.

9. Transport- und Verladeanordnung nach einem der Ansprüche 1 bis 8, **dadurch gekennzeichnet, dass** die Verladevorrichtung (20) wenigstens einen Abstützbereich (68) aufweist, der sich in einer Verladerichtung (V) erstreckt und entlang dessen verlagerbare Abstützmittel (66) des Transportwagens (10) bewegbar sind.

10. Transport- und Verladeanordnung nach einem der Ansprüche 1 bis 9, **dadurch gekennzeichnet, dass** die Transportaufnahme (12) wenigstens zwei trennbare/verbindbare Teilaufnahmen (102, 104) aufweist, wobei die beiden Teilaufnahmen (102, 104) insbesondere zwei stirnseitig aneinander anlegbare Seitenwandungen (106, 108) aufweisen und beide Seitenwandungen (106, 108) über Verbindungsmittel (110) und Verbindungsgegenmittel (112) aneinander festlegbar sind, die durch gegenseitige horizontale Verlagerung voneinander lösbar sind.

11. Transport- und Verladeanordnung nach einem der Ansprüche 1 bis 10, **dadurch gekennzeichnet, dass** die Transportaufnahme (12) am Fahrgestell (14) lösbar festlegbar ist.

12. Transport- und Verladeanordnung nach einem der Ansprüche 1 bis 11, **dadurch gekennzeichnet, dass** das Fahrgestell (14) wenigstens zwei Teilfahrgestelle (114, 116) aufweist, die mittels Verriegelungsmitteln (118) trennbar verbindbar sind, wobei an wenigstens einem der Teilfahrgestelle (114, 116) insbesondere ein Stützfahrgestell (122, 122A) vorgesehen ist.

13. Transport- und Verladeanordnung nach einem der Ansprüche 10 bis 12, **dadurch gekennzeichnet, dass** die Verladevorrichtung (20) zwei voneinander unabhängig ausfahrbare Verladeteile (26A, 26B) aufweist, an denen jeweils eine der Teilaufnahmen (102, 104) in Gravitationsrichtung (GR) abstützbar ist und die jeweils Eingriffsmittel (30) zur Herstellung oder zum Lösen der zug- und/oder schubfesten Verbindung mit einer der Teilaufnahmen (102, 104) aufweisen.

14. Transport- und Verladeanordnung nach einem der Ansprüche 1 bis 13, **dadurch gekennzeichnet, dass** die Höhenverstellungseinrichtung (34) wenigstens eine Akkumulatoreinrichtung (42) aufweist, wobei vorzugsweise der Transportwagen (10) mit der Akkumulatoreinrichtung (42) verbundene elektrische Anschlussmittel (70) aufweist und an der Verladevorrichtung (20) mit einer elektrischen Stromversorgungseinheit (74) des Kraftfahrzeugs (4) verbindbare Anschlussgegenmittel (72) vorgesehen sind, die in einer Fixierstellung des Transportwagens (10) an der Verladevorrichtung (20) von den elektrischen Anschlussmitteln (70) kontaktierbar sind, und wobei insbesondere am Transportwagen (10) zweite elektrische Anschlussmittel (76) vorgesehen sind, die mit den fahrzeugseitigen Anschlussgegenmitteln (72) verbindbar sind und über die ein Kühlaggregat (78) mit elektrischem Strom versorgbar ist.

15. Transport- und Verladeanordnung nach einem der Ansprüche 1 bis 14, **dadurch gekennzeichnet, dass** der Transportwagen (10) einen Fahrantrieb (82) aufweist, wobei der Transportwagen (10) insbesondere ein Fahrassistenzsystem und/oder eine Leuchteinrichtung (84) aufweist.

16. Transport- und Verladeanordnung nach einem der Ansprüche 1 bis 15, **dadurch gekennzeichnet, dass** die Transportaufnahme (12) klappbar ausgebildet ist.

17. Transport- und Verladeanordnung nach einem der Ansprüche 1 bis 16, **dadurch gekennzeichnet, dass** am Transportwagen (10) eine Warenerfassungs- und/oder Bezahl-Einrichtung (88) vorgesehen ist.

18. Transport- und Verladeanordnung nach einem der Ansprüche 1 bis 17, **dadurch gekennzeichnet, dass** am Transportwagen (10) eine integrierte Regenabdeckung (96) vorgesehen ist.

19. Transportwagen zur Verwendung in einer Transport- und Verladeanordnung nach einem der Ansprüche 1 bis 18 mit einem Transportwagen (10), der ein Fahrgestell (14) mit mehreren Abrollmitteln (16) und wenigstens eine Transportaufnahme (12) aufweist, wobei das Fahrgestell (14) zwischen einer Transportstellung und einer Verladestellung verstellbar ist und der Transportwagen (10) eine elektrisch betriebene Höhenverstellungseinrichtung (34) aufweist, mittels der in der Transportstellung eine Höhe (H, H1, H2) des Transportwagens (10) einstellbar ist, **dadurch gekennzeichnet, dass** das Fahrgestell (14) zur Einstellung der Höhe (H, H1, H2) des Transportwagens (10) ein wenigstens teilweise teleskopierbares Gestänge (36) aufweist und drei Abrollmittel (16) an jeweils einer Teleskopeinrichtung (37) gehalten sind, wobei die Teleskopeinrichtungen (37) voneinander unabhängig verstellbar sind.

20. Verladeverfahren unter Verwendung einer Transport- und Verladeanordnung nach einem der Ansprüche 1 bis 18, bei dem
in einem ersten Schritt der Transportwagen (10) an die im Kraftfahrzeug (4) aufgenommene Verladevorrichtung (20) angenähert wird und
in einem zweiten Schritt eine Position des Transportwagens (10) gegenüber der Verladevorrichtung (20) ermittelt wird,
**dadurch gekennzeichnet, dass** in einem dritten Schritt in Abhängigkeit der ermittelten Position eine Anlegestellung des Transportwagens (10) selbsttätig eingestellt wird, in der die Transportaufnahme (12) gegenüber der Verladevorrichtung (20) in einer vorbestimmten Weise angeordnet ist, bei der die Höhe (H) und die horizontale Ausrichtung der Transportaufnahme (12) gegenüber der Verladevorrichtung (20) angepasst ist, wobei die horizontale Ausrichtung bezüglich zwei zueinander senkrecht stehender horizontaler Raumachsen erfolgt.

21. Verladeverfahren nach Anspruch 20, **dadurch gekennzeichnet, dass** im dritten Schritt die Abstände (A) von wenigstens zwei Abrollmitteln (16) gegenüber der Transportaufnahme (12) eingestellt werden.

22. Verladeverfahren nach Anspruch 20 oder 21, **dadurch gekennzeichnet, dass** in einem vierten Schritt der Transportwagen (10) aus der Anlegestellung in eine Abstützstellung verstellt wird, in der er in Gravitationsrichtung (GR) an der Verladevorrichtung (20) abgestützt ist, wobei in der Abstützstellung insbesondere die zug- und/oder schubfeste Verbindung zwischen dem Transportwagen (10) und der Verlagerungsvorrichtung (20) hergestellt ist und in einem fünften Schritt ein dem Kraftfahrzeug (4) zugewandter Teil des Fahrgestells (14) in die Fahrgestellaufnahme (18) verlagert wird.

23. Verladeverfahren nach Anspruch 22, **dadurch gekennzeichnet, dass** der Transportwagen (10) in einem sechsten Schritt mit dem teilweise in der Fahrgestellaufnahme (18) aufgenommenen Fahrgestell (14) und einem sich am Untergrund (G) abstützenden, vom Kraftfahrzeug (4) abgewandten Teil des Fahrgestells (14) mittels der Verladevorrichtung (20) verlagert wird, wobei insbesondere der am Untergrund (G) abgestützte Teil des Fahrgestells (14) während des sechsten Schrittes zum Ausgleich einer vertikalen Verlagerung verstellt wird, um die eingestellte Ausrichtung der Transportaufnahme (12) gegenüber der Verladevorrichtung (20) beizubehalten.

24. Verladeverfahren nach Anspruch 23, **dadurch gekennzeichnet, dass** der Transportwagen (10) in einem dem sechsten Schritt nachfolgenden siebten Schritt in die Verladestellung verbracht wird, in der auch der vom Kraftfahrzeug (4) abgewandte Teil des Fahrgestells (14) in die Fahrgestellaufnahme (18) verlagert wird.

25. Verladeverfahren nach Anspruch 24, **dadurch gekennzeichnet, dass** der Transportwagen (10) in einem dem ersten bis siebten Schritt nachfolgenden Entladevorgang entgegen der Verladevorrichtung (V) aus dem Laderaum (8) heraus verlagert wird und dabei zunächst der dem Kraftfahrzeug (4) abgewandte Teil und dann der dem Kraftfahrzeug (4) zugewandte Teil des Fahrgestells (14) ausgefahren wird, wobei insbesondere das Fahrgestell (14) in Abhängigkeit des Signals einer Druck- oder Lagesensorik ausgefahren und in die Anlegestellung verbracht wird.

## Claims

1. Transport and loading assembly (2) for a motor vehicle (4), such as in particular a passenger car, with a loading space (8) extending up to a rear opening (6),
with a transport car (10) which comprises a chassis (14) with multiple rollers (16) and at least one transport mount (12), wherein the chassis (14) can be adjusted between a transport position and a loading position, and
with a loading device (20) which can be installed in the loading space (8) and which has a loading mechanism (24) for loading and/or unloading the transport car (10) into or out of the loading space (8),
wherein the transport car (10) has an electrically operated height adjustment apparatus (34) by means of which a height (H, H1, H2) of the transport car (10) can be adjusted in the transport position,
**characterized in that** the chassis (14) has an at least partially telescopic linkage (36) for adjusting the height (H, H1, H2) of the transport car (10), and three rollers (16) are held on a respective telescopic apparatus (37), wherein the telescopic apparatuses (37) are adjustable independently of one another.

2. Transport and loading assembly according to claim 1, **characterized in that** each roller (16) is held on its own telescopic apparatus (37) for adjusting the vertical distance (A) relative to the transport mount (12).

3. Transport and loading assembly according to claim 1 or 2, **characterized in that** a sensor arrangement (48) is provided which acts between the loading device (20) and the transport car (10), and the height (H, H1, H2) of the transport car (10) can be adjusted as a function of a signal from the sensor arrangement (48).

4. Transport and loading assembly according to any one of claims 1 to 3, **characterized in that** a vertical distance (A) of the transport mount (12) relative to at least two rollers (16) for aligning the transport mount (12) can be adjusted differently by means of the height adjustment apparatus (34).

5. Transport and loading assembly according to any one of claims 1 to 4, **characterized in that** a guide aid (52, 52A) acting in vertical direction is provided on the loading device (20), against which guide aid the transport car (10) can be docked, wherein, in particular the guide aid (52, 52A) is held on the loading device (20) in a horizontally pivotable manner and can be docked around a corner region (50) formed by two side surfaces (S) of the transport container (12).

6. Transport and loading assembly according to any one of claims 1 to 5, **characterized in that** a chassis mount (18) is provided on the transport car (10), in which the chassis (14) can be at least partially accommodated in the loading position, wherein the chassis mount (18) has in particular at least one telescopic mount (62), into which the at least one telescopic apparatus (37) can be at least partially retracted in the loading position.

7. Transport and loading assembly according to any one of claims 1 to 6, **characterized in that** the loading device (20) has engagement means (30) which can be displaced into an extension position in order to establish or release a tension- and/or shear-resistant connection with the transport car (10), wherein the engagement means (30) are held in particular on at least one extendable loading part (26, 26A, 26B) of the loading device (20), on which the transport mount (12) can be supported in the direction of gravity (GR), and in the loading position, in addition to the tension- and/or shear-resistant connection to the transport car (10), a securing of the transport car (10) acting counter to the direction of gravity (GR) can also be established.

8. Transport and loading assembly according to claim 7, **characterized in that** the engagement means (30) are formed on a loading carriage (64) which can be displaced by a motor on the loading part (26, 26A, 26B), wherein the loading carriage (64) has, in particular, an upper-side longitudinal slot (54), which can be engaged behind by a rear gripping element (58) on the transport vehicle or vice versa.

9. Transport and loading assembly according to any one of claims 1 to 8, **characterized in that** the loading device (20) has at least one support region (68) which extends in a loading direction (V) and along which displaceable support means (66) of the transport car (10) can be moved.

10. Transport and loading assembly according to any one of claims 1 to 9, **characterized in that** the transport mount (12) has at least two separable/connectable partial mounts (102, 104), wherein the two partial mounts (102, 104) have in particular two side walls (106, 108) which can be docked against one another at their end faces and both side walls (106, 108) can be fixed to one another via connecting means (110) and connecting counter-means (112), which can be released from one another by mutual horizontal displacement.

11. Transport and loading assembly according to any one of claims 1 to 10, **characterized in that** the transport mount (12) can be detachably fixed to the chassis (14).

12. Transport and loading assembly according to any one of claims 1 to 11, **characterized in that** the chassis (14) has at least two partial chassis (114, 116), which can be separably connected by means of locking means (118), wherein a support chassis (122, 122A) is provided in particular on at least one of the partial chassis (114, 116).

13. Transport and loading assembly according to any one of claims 10 to 12, **characterized in that** the loading device (20) has two loading parts (26A, 26B) which can be extended independently of one another and on each of which one of the partial mounts (102, 104) can be supported in the direction of gravity (GR) and which each have engagement means (30) for establishing or releasing the tension- and/or shear-resistant connection with one of the partial mounts (102, 104).

14. Transport and loading assembly according to any one of claims 1 to 13, **characterized in that** the height adjustment device (34) has at least one accumulator apparatus (42), the transport car (10) preferably having electrical connection means (70) connected to the accumulator apparatus (42), and connection counter-means (72) which can be connected to an electrical power supply unit (74) of the motor vehicle (4) being provided on the loading device (20), which can be contacted by the electrical connection means (70) when the transport car (10) is in a fixed position on the loading device (20), and second electrical connection means (76) being provided, in particular on the transport car (10), which can be connected to the vehicle-side connection counter-means (72) and via which a cooling unit (78) can be supplied with electrical current.

15. Transport and loading assembly according to any one of claims 1 to 14, **characterized in that** the transport car (10) has a drive (82), wherein the transport car (10) has in particular a driving assistance system and/or a lighting device (84).

16. Transport and loading assembly according to any one of claims 1 to 15, **characterized in that** the transport mount (12) is configured to be foldable.

17. Transport and loading assembly according to any one of claims 1 to 16, **characterized in that** a goods detection and/or payment apparatus (88) is provided on the transport car (10).

18. Transport and loading assembly according to any one of claims 1 to 17, **characterized in that** an integrated rain cover (96) is provided on the transport car (10).

19. Transport car for use in a transport and loading assembly according to any one of claims 1 to 18, having a transport car (10), which has a chassis (14) with a plurality of rollers (16) and at least one transport mount (12), wherein the chassis (14) can be adjusted between a transport position and a loading position, and the transport car (10) has an electrically operated height adjustment apparatus (34), by means of which a height (H, H1, H2) of the transport car (10) can be adjusted in the transport position, **characterized in that** the chassis (14) has an at least partially telescopic linkage (36) for adjusting the height (H, H1, H2) of the transport car (10) and three rollers (16) are each held on a telescopic apparatus (37), the telescopic apparatuses (37) being adjustable independently of one another.

20. Loading method using a transport and loading assembly according to any one of claims 1 to 18, in which
in a first step, the transport car (10) is brought closer to the loading device (20) accommodated in the motor vehicle (4), and
in a second step, a position of the transport car (10) is determined relative to the loading device (20),
**characterized in that** in a third step, as a function of the determined position, an docking position of the transport car (10) is automatically set, in which the transport mount (12) is arranged relative to the loading device (20) in a predetermined manner, in which the height (H) and the horizontal alignment of the transport mount (12) is adjusted relative to the loading device (20), the horizontal alignment taking place with respect to two mutually perpendicular horizontal spatial axes.

21. Loading method according to claim 20, **characterized in that**, in the third step, the distances (A) of at least two rollers (16) are adjusted relative to the transport mount (12).

22. Loading method according to claim 20 or 21, **characterized in that**, in a fourth step, the transport car (10) is moved from the docking position into a support position in which it is supported on the loading device (20) in the direction of gravity (GR), wherein, in the support position, in particular the tension- and/or shear-resistant connection between the transport car (10) and the displacement device (20) is established and, in a fifth step, a part of the chassis (14) facing the motor vehicle (4) is displaced into the chassis mount (18).

23. Loading method according to claim 22, **characterized in that** the transport car (10) is displaced in a sixth step with the chassis (14) partially accommodated in the chassis mount (18) and a part of the chassis (14) facing away from the motor vehicle (4) and supported on the ground (G) by means of the loading device (20), wherein, in particular, the part of the chassis (14) supported on the ground (G) is displaced during the sixth step to compensate for a vertical displacement in order to maintain the set alignment of the transport mount (12) with respect to the loading device (20).

24. Loading method according to claim 23, **characterized in that** the transport car (10) is moved into the loading position in a seventh step following the sixth step, in which the part of the chassis (14) facing away from the motor vehicle (4) is also displaced into the chassis mount (18).

25. Loading method according to claim 24, **characterized in that** the transport car (10) is displaced out of the loading space (8) counter to the loading device (V) in an unloading process following the first to seventh steps and, in the process, firstly the part of the chassis (14) facing away from the motor vehicle (4) and then the part of the chassis (14) facing the motor vehicle (4) is extended, in particular the chassis (14) being extended and moved into the docking position as a function of the signal from a pressure or position sensor system.

## Revendications

1. Agencement de transport et de chargement (2) pour un véhicule automobile (4), comme en particulier une voiture particulière, avec un espace de chargement (8) s'étendant jusqu'à une ouverture arrière (6),
avec un chariot de transport (10) qui présente un châssis (14) avec plusieurs moyens de déroulement (16) et au moins un logement de transport (12), dans lequel le châssis (14) est réglable entre une position de transport et une position de chargement, et
avec un dispositif de chargement (20) pouvant être installé dans l'espace de chargement (8) qui présente un mécanisme de chargement (24) pour charger et/ou décharger le chariot de transport (10) dans ou hors de l'espace de chargement (8),
dans lequel le chariot de transport (10) présente un appareil de réglage en hauteur (34) à commande électrique, au moyen duquel une hauteur (H, H1, H2) du chariot de transport (10) peut être réglée dans la position de transport,
**caractérisé en ce que** le châssis (14) présente une tringlerie (36) au moins partiellement télescopique pour le réglage de la hauteur (H, H1, H2) du chariot de transport (10) et trois moyens de déroulement (16) sont maintenus respectivement sur un appareil télescopique (37), dans lequel les appareils télescopiques (37) sont réglables indépendamment les uns des autres.

2. Agencement de transport et de chargement selon la revendication 1, **caractérisé en ce que** chaque moyen de roulement (16) est maintenu sur son propre appareil télescopique (37) pour le réglage de la distance verticale (A) par rapport au logement de transport (12).

3. Agencement de transport et de chargement selon la revendication 1 ou 2, **caractérisé en ce qu'**est prévu un agencement de capteurs (48) qui agit entre le dispositif de chargement (20) et le chariot de transport (10), et la hauteur (H, H1, H2) du chariot de transport (10) peut être réglée en fonction d'un signal de l'agencement de capteurs (48).

4. Agencement de transport et de chargement selon l'une quelconque des revendications 1 à 3, **caractérisé en ce qu'**une distance verticale (A) du logement de transport (12) peut être réglée différemment au moyen de l'appareil de réglage en hauteur (34) par rapport à au moins deux moyens de roulement (16) pour orienter le logement de transport (12).

5. Agencement de transport et de chargement selon l'une quelconque des revendications 1 à 4, **caractérisé en ce qu'**une aide au guidage (52, 52A) agissant dans la direction verticale est prévu sur le dispositif de chargement(20), contre laquelle le chariot de transport (10) peut être arrimé, dans lequel en particulier l'aide au guidage (52, 52A) est maintenue sur le dispositif de chargement (20) de manière pivotante horizontalement et peut être arrimé autour d'une zone d'angle (50) du logement de transport (12) formée par deux surfaces latérales (S).

6. Agencement de transport et de chargement selon l'une quelconque des revendications 1 à 5, **caractérisé en ce qu'**un logement de châssis (18) est prévu sur le chariot de transport (10), logement dans lequel le châssis (14) peut être logé au moins partiellement dans la position de chargement, dans lequel le logement de châssis (18) présente en particulier au moins un logement télescopique (62) dans lequel l'au moins un appareil télescopique (37) peut être introduit au moins partiellement dans la position de chargement.

7. Agencement de transport et de chargement selon l'une quelconque des revendications 1 à 6, **caractérisé en ce que** le dispositif de chargement (20) présente des moyens d'engagement (30) qui peuvent être déplacés dans une position de sortie pour établir ou rompre une liaison résistante à la traction et/ou à la poussée avec le chariot de transport (10), dans lequel les moyens d'engagement (30) sont en particulier maintenus sur au moins une partie de chargement (26, 26A, 26B) extensible du dispositif de chargement (20), sur laquelle le logement de transport (12) peut s'appuyer dans le sens de la gravité (GR), ainsi que, dans la position de chargement, une sécurisation du chariot de transport (10) agissant dans le sens opposé au sens de la gravité (GR) peut en outre être réalisée par l'intermédiaire des moyens d'engagement (30), en plus de la liaison résistante à la traction et/ou à la poussée avec le chariot de transport (10).

8. Agencement de transport et de chargement selon la revendication 7, **caractérisé en ce que** les moyens d'engagement (30) sont réalisés sur un chariot de chargement (64) qui peut être déplacé de manière motorisée sur la partie de chargement (26, 26A, 26B), dans lequel le chariot de chargement (64) présente en particulier une fente longitudinale supérieure (54) qui peut être saisie par l'arrière par un élément de saisie arrière (58) côté chariot de transport ou inversement.

9. Agencement de transport et de chargement selon l'une quelconque des revendications 1 à 8, **caractérisé en ce que** le dispositif de chargement (20) présente au moins une zone d'appui (68) qui s'étend dans une direction de chargement (V) et le long de laquelle des moyens d'appui (66) déplaçables du chariot de transport (10) sont mobiles.

10. Agencement de transport et de chargement selon l'une quelconque des revendications 1 à 9, **caractérisé en ce que** le logement de transport (12) présente au moins deux logements partiels (102, 104) séparables/connectables, dans lequel les deux logements partiels (102, 104) présentent en particulier deux parois latérales (106, 108) pouvant être arrimées l'une contre l'autre côté avant et les deux parois latérales (106, 108) peuvent être fixées l'une à l'autre par des moyens de liaison (110) et des contre-moyens de liaison (112) qui peuvent être détachés les uns des autres par l'intermédiaire d'un déplacement horizontal mutuel.

11. Agencement de transport et de chargement selon l'une quelconque des revendications 1 à 10, **caractérisé en ce que** le logement de transport (12) peut être fixé au châssis (14) de manière amovible.

12. Agencement de transport et de chargement selon l'une quelconque des revendications 1 à 11, **caractérisé en ce que** le châssis (14) présente au moins deux châssis partiels (114, 116) qui peuvent être connectés de manière séparable à l'aide de moyens de verrouillage (118), dans lequel un châssis d'appui (122, 122A) est en particulier prévu sur au moins d'un des châssis partiels (114, 116).

13. Agencement de transport et de chargement selon l'une quelconque des revendications 10 à 12, **caractérisé en ce que** le dispositif de chargement (20) présente deux parties de chargement (26A, 26B) pouvant être déployées indépendamment l'une de l'autre, sur lesquelles respectivement un des logements partiels (102, 104) peut s'appuyer dans le sens de la gravité (GR) et qui présentent respectivement des moyens d'engagement (30) pour établir ou rompre la liaison résistante à la traction et/ou à la poussée avec un des logements partiels (102, 104).

14. Agencement de transport et de chargement selon l'une quelconque des revendications 1 à 13, **caractérisé en ce que** l'appareil de réglage en hauteur (34) présente au moins un appareil d'accumulateur (42), dans lequel le chariot de transport (10) présente de préférence des moyens de raccordement électriques (70) connectés à l'appareil d'accumulateur (42) et des contre-moyens de raccordement (72) pouvant être connectés à une unité d'alimentation électrique (74) du véhicule automobile (4) sont prévus sur le dispositif de chargement (20) qui, dans une position de fixation du chariot de transport (10) sur le dispositif de chargement (20), peuvent être mis en contact par les moyens de raccordement électriques (70), et dans lequel sont prévus, en particulier sur le chariot de transport (10), de seconds moyens de raccordement électriques (76) qui peuvent être connectés aux contre-moyens de raccordement (72) côté véhicule et par l'intermédiaire desquels un groupe frigorifique (78) peut être alimenté en courant électrique.

15. Agencement de transport et de chargement selon l'une quelconque des revendications 1 à 14, **caractérisé en ce que** le chariot de transport (10) présente un entraînement (82), dans lequel le chariot de transport (10) présente en particulier un système d'assistance à la conduite et/ou un appareil d'éclairage (84).

16. Agencement de transport et de chargement selon l'une quelconque des revendications 1 à 15, **caractérisé en ce que** le logement de transport (12) est réalisé de manière rabattable.

17. Agencement de transport et de chargement selon l'une quelconque des revendications 1 à 16, **caractérisé en ce qu'**un appareil d'enregistrement de marchandises et/ou de paiement (88) est prévu sur le chariot de transport (10).

18. Agencement de transport et de chargement selon l'une quelconque des revendications 1 à 17, **caractérisé en ce qu'**une protection contre la pluie (96) intégré est prévu sur le chariot de transport (10).

19. Chariot de transport destiné à être utilisé dans un agencement de transport et de chargement selon l'une quelconque des revendications 1 à 18 avec un chariot de transport (10) qui présente un châssis (14) avec plusieurs moyens de roulement (16) et au moins un logement de transport (12), dans lequel le châssis (14) est réglable entre une position de transport et une position de chargement et le chariot de transport (10) présente un appareil de réglage en hauteur (34) à commande électrique, au moyen duquel une hauteur (H, H1, H2) du chariot de transport (10) peut être réglée dans la position de transport, **caractérisé en ce que** le châssis (14) présente, pour le réglage de la hauteur (H, H1, H2) du chariot de transport (10), une tringlerie (36) au moins partiellement télescopique et trois moyens de roulement (16) sont maintenus respectivement sur un appareil télescopique (37), dans lequel les appareils télescopiques (37) sont réglables indépendamment les uns des autres.

20. Procédé de chargement utilisant un agencement de transport et de chargement selon l'une quelconque des revendications 1 à 18, dans lequel
dans une première étape, le chariot de transport (10) est rapproché du dispositif de chargement (20) logé dans le véhicule automobile (4), et
dans une deuxième étape, une position du chariot de transport (10) par rapport au dispositif de chargement (20) est déterminée,
**caractérisé en ce que**, dans une troisième étape, en fonction de la position déterminée, une position d'arrimage du chariot de transport (10) est automatiquement réglée, dans laquelle le logement de transport (12) est disposé d'une manière prédéterminée par rapport au dispositif de chargement (20), dans laquelle la hauteur (H) et l'orientation horizontale du logement de transport (12) sont adaptées par rapport au dispositif de chargement (20), dans lequel l'orientation horizontale s'effectue par rapport à deux axes spatiaux horizontaux perpendiculaires entre eux.

21. Procédé de chargement selon la revendication 20, **caractérisé en ce que** dans la troisième étape, les distances (A) d'au moins deux moyens de roulement (16) sont réglées par rapport au logement de transport (12).

22. Procédé de chargement selon la revendication 20 ou 21, **caractérisé en ce que**, dans une quatrième étape, le chariot de transport (10) est déplacé de la position d'arrimage dans une position d'appui dans laquelle il s'appuie dans le sens de la gravité (GR) sur le dispositif de chargement (20), dans lequel la liaison résistante à la traction et/ou à la poussée entre le chariot de transport (10) et le dispositif de déplacement (20) est en particulier établie dans la position d'appui et, dans une cinquième étape, une partie du châssis (14) orientée vers le véhicule automobile (4) est déplacée dans le logement de châssis (18).

23. Procédé de chargement selon la revendication 22, **caractérisé en ce que**, dans une sixième étape, le chariot de transport (10) est déplacé au moyen du dispositif de chargement (20) avec le châssis (14) partiellement logé dans le logement de châssis (18) et une partie du châssis (14) opposée au véhicule automobile (4) s'appuyant sur le sol (G), dans lequel en particulier la partie du châssis (14) s'appuyant sur le sol (G) est déplacée pendant la sixième étape pour compenser un déplacement vertical afin de conserver l'orientation réglée du logement de transport (12) par rapport au dispositif de chargement (20).

24. Procédé de chargement selon la revendication 23, **caractérisé en ce que**, dans une septième étape suivant la sixième étape, le chariot de transport (10) est amené dans la position de chargement dans laquelle la partie du châssis (14) opposée au véhicule automobile (4) est également déplacée dans le logement de châssis (18).

25. Procédé de chargement selon la revendication 24, **caractérisé en ce que** le chariot de transport (10) est déplacé hors de l'espace de chargement (8) à l'opposé du dispositif de chargement (V) lors d'une opération de déchargement suivant la première à la septième étape et, dans un premier temps, la partie du châssis opposée au véhicule automobile (4) puis la partie du châssis (14) tournée vers le véhicule automobile (4) sont déployées, dans lequel le châssis (14) est en particulier déployé en fonction du signal d'un capteur de pression ou de position et amené dans la position d'arrimage.
